**Europäisches Patentamt**

**European Patent Office**

**Office européen des brevets**

(19)

(11) Veröffentlichungsnummer: **0 278 532**
**A2**

(12) **EUROPÄISCHE PATENTANMELDUNG**

(21) Anmeldenummer: **88103305.4**

(22) Anmeldetag: **11.11.81**

(51) Int. Cl.4: **H02K 41/02 , B60G 13/02**

(30) Priorität: **11.11.80 DE 8030107 U**

(43) Veröffentlichungstag der Anmeldung:
**17.08.88 Patentblatt 88/33**

(60) Veröffentlichungsnummer der früheren
Anmeldung nach Art. 76 EPÜ: **0 052 346**

(84) Benannte Vertragsstaaten:
**AT BE CH DE FR GB IT LI**

(71) Anmelder: **MAGNET-BAHN GMBH**
**Emslander Strasse 3**
**D-8130 Starnberg(DE)**

(72) Erfinder: **Heidelberg, Götz, Dipl.-Phys.**

**D-8136 Percha(DE)**
Erfinder: **Gründl,Andreas,Dr.**
**Haseneystrasse 20**
**D-8000 München 70(DE)**
Erfinder: **Rosner,Peter,Dr.**
**Waltherstrasse 16**
**D-8000 München 2(DE)**

(74) Vertreter: **Klunker . Schmitt-Nilson . Hirsch**
**Winzererstrasse 106**
**D-8000 München 40(DE)**

(54) **Elektrischer Antrieb oder Generator.**

(57) Elektrischer linearer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (22) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt, wobei der Stator (2) in mehrere Statorabschnitte (n, n + 1, ...) aufgeteilt ist, denen je eine Schalteinrichtung (40) zugeordnet ist, zur Verwendung beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen, dabei ist zur Auffahrverhinderung eine Steuerung zur Begrenzung der Geschwindigkeit oder eine Abstandssteuerung über miteinander kommunizierende Statorabschnitte vorgesehen.

FIG. 9

## Elektrischer Antrieb oder Generator sowie deren Verwendungen

Der Erfindung bezieht sich auf einen elektrischen Antrieb oder Generator gemäß Oberbegriff des Anspruchs 1.

Der Erfindung liegt die Aufgabe zugrunde, einen selbststeuernden Antrieb oder Generator dieser Art zu schaffen, der beim Betrieb mehrerer Läufer gleichzeitig ein Auffahren verhindert.

Zur Lösung dieser Aufgabe ist der Antrieb oder Generator so ausgebildet, wie im kennzeichnenden Teil des Anspruchs 1 angegeben.

Bei der Erfindung sorgt die von dem Sensor gesteuerte elektronische Schalteinrichtung selbsttätig dafür, daß bei passenden Relativstellungen von Stator und Läufer den Leitern Strom zugeführt oder von den Leitern Strom abgeführt wird. Die Leiter sind in den meisten Fällen in Form von Spulen oder Wicklungen vorgesehen. In vielen Fällen ist es günstig und daher bevorzugt, mehrere Sensoren längs der Bewegungsbahn des Läufers am Stator entlang vorzusehen. Obwohl im Anspruch 1 von "Stromleitern" und "Dauermagneten" gesprochen ist, soll der untere Grenzfall von nur einem Stromleiter oder nur einem Dauermagnet mit umfaßt sein.

Die Ausdrucksweise "Antrieb oder Generator" soll nicht bedeuten, daß ein und dasselbe Aggregat in der Lage sein muß, diese beiden Funktionen wahlweise zu erfüllen. Es soll vielmehr zum Ausdruck gebracht werden, daß nach dem Prinzip der Erfindung sowohl ein Antrieb bzw. Motor als auch ein Generator erstellt werden kann. Nach dem Prinzip der Erfindung kann man allerdings auch ein Aggregat erstellen, das sowohl als Antrieb als auch als Generator arbeiten kann, was weiter unten noch deutlicher werden wird.

Vorzugsweise verwendet man einen auf die funktionell sowieso vorgesehenen Dauermagnete oder auf gesondert zu diesem Zweck angeordnete Dauermagnete ansprechenden Sensor. Dies führt, besonders im erstgenannten Fall, zu einem einfach aufgebauten Antrieb oder Generator.

Dem linearen Antrieb ist bereits durch die in den Stromleitern induzierte Gegen-EMK eine Geschwindigkeitsbegrenzung und durch die Speisungsfrequenz und die Induktivität der Stromleiter eine Schubbegrenzung immanent. Vorzugsweise werden jedoch die Geschwindigkeit und/oder der Schub elektronisch begrenzt, wie weiter unten noch deutlicher werden wird.

Die elektronische Schalteinrichtung kann eine Leistungssteuereinrichtung zur Steuerung der den Stromleitern zugeführten oder entnommenen elektrischen Leistung aufweisen, die vorzugsweise eine Impulsbreitensteuerschaltung, eine Phasenanschnittschaltung, eine Zwischentaktungsschaltung oder eine Direktumrichterschaltung ist. Besonders bevorzugt wird eine Direktumrichterbrückenschaltung zur Vorschubsteuerung zusammen mit einer Phasenanschnittschaltung kombiniert, die in jedem Brückenzweig eine Reihenschaltung mit mindestens einem Stromleiter und mindestens einem steuerbaren Halbleiterschalter aufweist, wobei der steuerbare Halbleiterschalter mit einem von den Sensoren abgeleiteten Steuersignal beaufschlagbar ist. Dabei werden als steuerbare Halbleiterschalter Thyristoren, insbesondere solche, die mit geringer Steuerleistung über die Gateelektrode sowohl ein-als auch ausschaltbar sind, und Triacs besonders bevorzugt.

Die Direktumrichterbrückenschaltung, mit deren Hilfe den einzelnen Stromleitern nur Halbwellen einer Polarität der zur Statorerregung verwendeten Netzwechselspannung zugeführt werden, kann als Halbbrücke oder als Vollbrücke ausgebildet sein. Im ersteren Fall wird nur jede zweite Halbwelle der Netzwechselspannung zum jeweiligen Stromleiter durchgelassen, während im letzteren Fall alle Halbwellen mit für den jeweiligen Stromleiter gleicher Polarität verwendet werden.

Wegen zahlreicher Vorteile ist es besonders bevorzugt, den Stator in mehrere Abschnitte aufzuteilen, denen jeweils eine Schalteinrichtung zugeordnet ist. Vorzugsweise, insbesondere bei Linearstatoren, ist pro Statorabschnitt mindestens ein Sensor vorgesehen. Vorzugsweise sind die Statorabschnitte kürzer als der Läufer, so daß sich die Antriebs-oder Generatorfunktion auf mehrere Statorabschnitte verteilt. Da pro Abschnitt geringere Ströme bzw. Leistungen verarbeitet werden müssen, ergibt sich eine Verteilung der elektrischen Verluste. Da pro Ab schnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1ooo V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen. Im unteren Grenzfall besteht ein Statorabschnitt aus einem einzigen Stromleiterpaar bzw. einer einzigen Spule.

Für viele Anwendungsbereiche, beispielsweise Linearantriebe, macht man den Läufer wesentlich kürzer als den Stator. Insbesondere in diesem Fall ist es besonders vorteilhaft, die Länge der Abschnitte mindestens so groß zu machen wie die Länge der Steuermagnetreihe, das heißt die Länge der in Läuferbewegungsrichtung auf dem Läufer hintereinander angeordneten Steuermagnete. Dies gilt natürlich sinngemäß auch, wenn nicht auf Magnetfelder ansprechende Sensoren verwendet werden und entsprechend andere, auf solche Sensoren einwirkende Steuereinrichtungen am Läufer verwendet werden.

Jeder Stromleitergruppe eines Abschnittes, wenn für die weiteren Überlegungen einmal vereinfachend angenommen ist, daß alle gleichzähligen Stromleiter eines ganzen Abschnittes elektrisch zusammengeschaltet sind, sind vorzugsweise wenigstens zwei Sensoren zugeordnet, vorteilhafterweise einer am Anfang und der andere am Ende des jeweiligen Abschnittes. Mit Hilfe des einen Sensors kann man die zugeordnete Stromleitergruppe einschalten, sobald der Läufer in den zugehörigen Abschnitt eintritt, und mit Hilfe des zweiten Sensors kann man die zugehörige Stromleitergruppe wieder abschalten, wenn der Läufer den zugehörigen Absatz verläßt.

Besonders bevorzugt ist aber eine Verteilung der Sensoren längs des Stators derart, daß bei jeder Läuferstellung für jede der Stromleitergruppen einer der ihr zugeordneten Sensoren von dem am Läufer angeordneten Steuermagneten bzw. anderen Steuereinrichtung beeinflußbar ist. Durch dies Sensorverteilung wird erreicht, daß man die jeweils betrachtete Stromleitergruppe solange eingeschaltet hält, wie von einem der dieser Stromleitergruppe zugeordneten Sensoren das Vorhandensein des Läufers im Bereich dieser Stromleitergruppe, vorzugsweise im Bereich des mit dieser Stromleitergruppe übereinstimmenden Abschnittes, festgestellt wird. Man umgeht dabei Probleme, die besonders dann, wenn der Läufer in Vorwärts-und Rückwärtsrichtung bewegbar sein soll, dadurch auftreten können, daß ein Teil der Sensoren eine Einschaltung und der Rest der Sensoren eine Abschaltung der Erregung der zugehörigen Stromleitergruppen bewirken soll.

Wenn man pro Statorpol mehrere voneinander getrennt ansteuerbare Stromleiter vorsieht und diese mit gleichzähligen Stromleitern anderer Statorpole zu mehreren Stromleitergruppen zusammenschaltet, werden in besonders bevorzugter Weise die den einzelnen Stromleitergruppen zugeordneten Sensoren zu Sensorgruppen zusammengefaßt, die je in einer Statorpolbreite untergebracht sind. Dabei befinden sich zwischen aufeinanderfolgenden Sensorgruppen Lücken und die Sensorgruppen folgen in Periodizitätsintervallen aufeinander, die der Länge der Steuermagnetreihe bzw. der Steuereinrichtungsreihe am Läufer entspricht.

Vorzugsweise sind in den Lücken zwischen aufeinanderfolgenden Sensorgruppen zusätzlich Einzelsensoren mit gleicher Periodizität wie die Sensorgruppen untergebracht. Diese Einzelsensoren können beispielsweise für die Anzeige verwendet werden, daß sich im jeweils betrachteten Bereich bzw. Abschnitt ein Läufer befindet.

Insbesondere dann, wenn man einen erfindungsgemäßen Antrieb als Linearantrieb ausbildet, bei dem der Stator eine Schiene für einen oder mehrere als Fahrzeug bzw. Fahrzeuge verwendeten bzw. verwendete Läufer dient, erweist es sich als besonders vorteilhaft, eine zur Gesamtsteuerung dienende Zentrale vorzusehen. Diese kann mit den Schalteinrichtungen der einzelnen Abschnitte über einen Leitungsbus verbunden sein, über den Daten zwischen der Zentrale und den einzelnen Abschnitten ausgetauscht werden. Dabei weisen die einzelnen Abschnitte in besonders bevorzugter Weise je eine Eingabe/Ausgabeschaltung auf, über die der jeweilige Abschnitt Daten über den Leitungsbus zur Zentrale geben und von der Zentrale empfangen kann. Jede Eingabe/Ausgabeschaltung ist vorzugsweise mit einem Multischalter versehen, über den die Verbindung zwischen der Schalteinrichtung des Abschnittes mit dem Leitungsbus herstellbar ist.

In besonders bevorzugter Weise werden den einzelnen Abschnitten über die Busleitung von der Zentrale Steuersignale z.B. hinsichtlich der zugelassenen Maximalgeschwindigkeit und der zugelassenen Vorschubkraft zugeführt. Zu diesem Zweck sind den einzelnen Abschnitten vorzugsweise Speicher, z.B. für diese Maximalwerte, zugeordnet, die von der Zentrale aus adressierbar sind und deren Speicherwerte die Schalteinrichtungen der einzelnen Abschnitte beeinflussen.

Insbesondere dann, wenn man mehrere Läufer gleichzeitig betreibt, kann man vorzugsweise jedem Abschnitt einen Speicher zuordnen, dem eine bestimmte Adresse zugeordnet ist und der laufend auf den neuesten Informationsstand gebracht wird, und die einzelnen Abschnittspeicher von der Zentrale zyklisch reihum abfragen lassen.

Beim gleichzeitigen Betrieb mehrerer Läufer wendet man vorzugsweise ein Sicherungssystem an. Zu diesem Zweck meldet jeder Abschnitt, der in seinem Bereich einen Läufer feststellt, an seine benachbarten Abschnitte, daß er besetzt ist. Wenn ein Abschnitt von einem benachbarten Abschnitt dessen Besetztmeldung erhält und selbst nicht besetzt ist, geht er in einen Sicherungszustand über, in dem er ein Spulenerregungsmuster aufweist, das auf einen unerwünscht in diesen Abschnitt einlaufenden Läufer bremsend wirkt. Gegebenenfalls können auch noch vor diesem gesicherten Abschnitt liegende weitere Abschnitte in den Sicherungszustand gebracht werden. Diese Sicherung kann ohne Zutun der Zentrale durch gegenseitige Beeinflussung benachbarter Abschnitte geschehen.

Eine Schubbegrenzung kann man vorzugsweise dadurch erreichen, daß man mit Hilfe einer hinsichtlich ihrer Zeitkonstante einstellbaren monostabilen Kippschaltung, im folgenden kurz Monoflop genannt,das Einschalten der dem jeweiligen Sondeninformationsmuster entsprechenden Triacs in jeder Halbwelle der zur Spulenerreichung verwendeten Netzwechselspannung verzögert.

Eine Geschwindigkeitsbegrenzung kann man dadurch erreichen, daß man ein hinsichtlich seiner Zeitkonstanten ebenfalls veränderbares, retriggerbares Monoflop einsetzt, das von Triggerimpulsen mit einer der Wagengeschwindigkeit entsprechenden Impulsfolgefrequenz getriggert wird und eine Weitergabe des Inhaltes des Zwischenspeichers dann, wenn die Maximalgeschwindigkeit vom Wagen überschritten ist, derart verzögert, daß der Wagen mindestens für einen Anfangsteil einer jeden Halbwelle der zur Spulenerregung verwendeten Netzwechselspannung auf eine bremsende Spulenerregung trifft.

Sowohl bei der Schubbegrenzungsschaltung als auch bei der Geschwindigkeitsbegrenzungsschaltung kann die Einstellung der Zeitkonstanten des jeweils verwendeten Monoflops durch digitale Ansteuerung von der Zentrale aus erfolgen.

Eine bevorzugte Verwendung des nach den beschriebenen Prinzipien aufgebauten, erfindungsgemäßen Linearantriebs oder Lineargenerators liegt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen. Bei all diesen Einsatzzwecken kommen der einfache konstruktive Aufbau und die vielfältigen Regelungsmöglichkeiten zum Tragen.

Bei linear angetriebenen bzw. gebremsten Transporteinheiten ist es häufig so, daß sich längs des Stators eine Reihe von Transporteinheiten mit gegenseitigem Abstand bewegen. Erfindungsgemäß ist eine Steuerung zur Begrenzung der Geschwindigkeit oder eine Abstandssteuerung, vorzugsweise über eine Zentrale oder über miteinander kommunizierende Statorabschnitte, vorgesehen, wobei Signale mindestens an die benachbarten Statorabschnitte gegeben werden. Ausgestaltungsmerkmale in dieser Hinsicht ergeben sich aus einem weiter unten beschriebenen konkreten Ausführungsbeispiel.

Vorstehend ist auch dann, wenn an sich die Antriebsfunktion im Vordergrund stand, vielfach von "Antrieb oder Generator" gesprochen worden. Dies ist geschehen, um zu betonen, daß auch bei Antrieben eine Umschaltbarkeit auf Generatorfunktion zum Bremsen vorgesehen sein kann.

Die Erfindung wird im folgenden anhand - schematisiert dargestellter Ausführungsbeispiele noch näher erläutert. Es zeigen:

Fig. 1 einen Längsschnitt durch einen Linearantrieb längs I-I in Fig. 4;

Fig. 2 eine Ansicht von unten auf den Stator des Linearantriebs von Fig. 1 entsprechend II-II in Fig. 1;

Fig. 3 eine Ansicht von oben auf den Läufer des Linearantriebs von Fig. 1 entsprechend III-III in Fig. 1;

Fig. 4 einen Querschnitt des Linearantriebs von Fig. 1 längs IV-IV in Fig. 1;

Fig. 5 bis 21 Ausführungsformen elektrischer Steuer-Schaltungen, die zur Steuerung der in den Fig. 1 bis 4 dargestellten Ausführungform eines Linearantriebs und entsprechend auch der nachfolgenden Ausführungsformen der Erfindung verwendbar sind;

In den verschiedenen Ausführungsbeispielen werden Teile, die sich funktionell entsprechen, mit gleichen Bezugszeichen versehen.

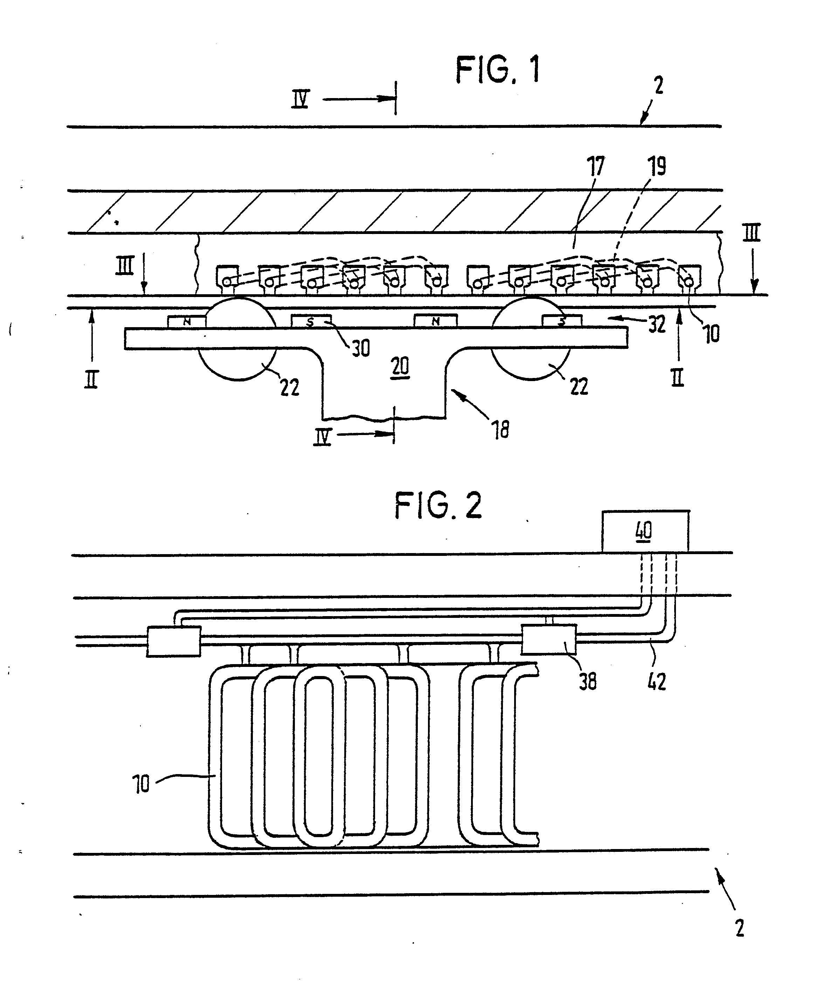

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von "Antrieb" gesprochen, obwohl die Auslegung ohne weiteres so getroffen sein kann, daß bei einer Verlangsamung der Geschwindigkeit der Transporteinheit von Antriebsfunktion auf Generatorfunktion umgeschaltet werden kann.

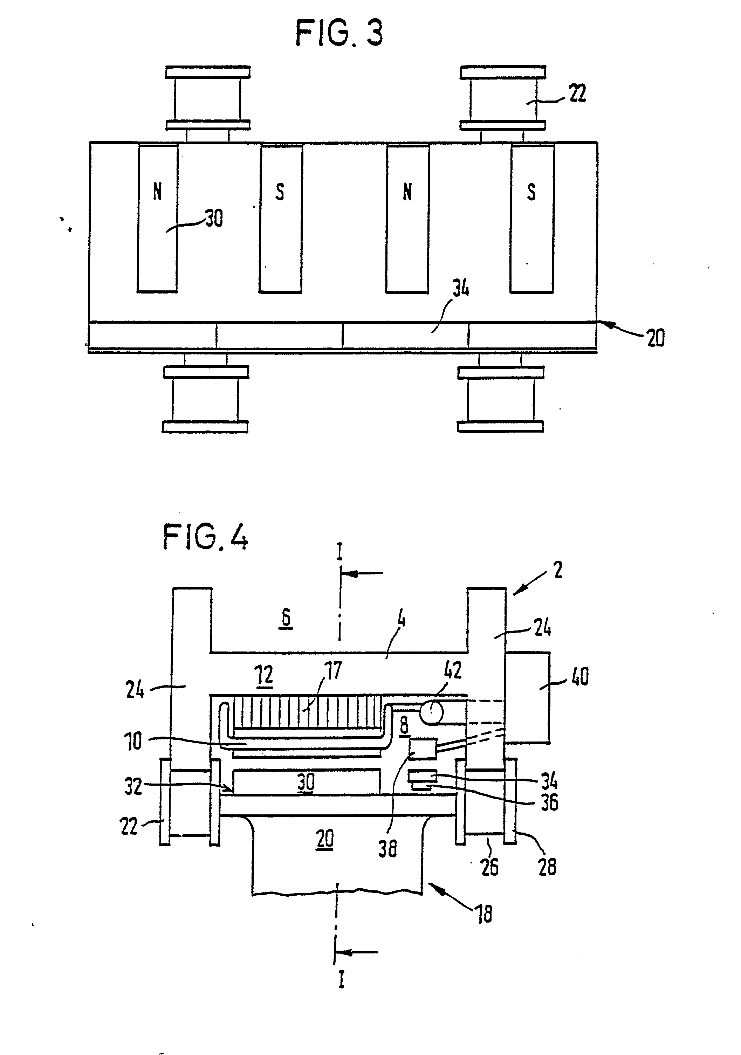

Der tragende Bestandteil des Stators 2 des Antriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa rechteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von den Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unten zum anderen Querast, um auf diese Weise Platz für die Überkreuzung mit den Längsästen der beiden benachbarten Spulen zu - schaffen.

Das Paket 17 bildet zusammen mit dem eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilchen oder Eisenoxidteilchen sehr kleiner Korngröße von beispielsweise 70 μm besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit view drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs.

Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite, fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulverfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38, deren Lageanordnung später genauer beschrieben wird, in Bewegungsrichtung des Wagens 20 verteilt mit geringem Abstand über den Steuermagneten 34 angeordnet. Die Hallsonden 38 liefern ihr Signal "Steuermagnet 34 befindet sich unter der Sonde" an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorgt sämtliche Spulen 10 mit Strom. Wie weiter unten noch ausführlicher beschrieben werden wird, ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 30. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich vom Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Ausführungsbeispiel ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung, zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen sind.

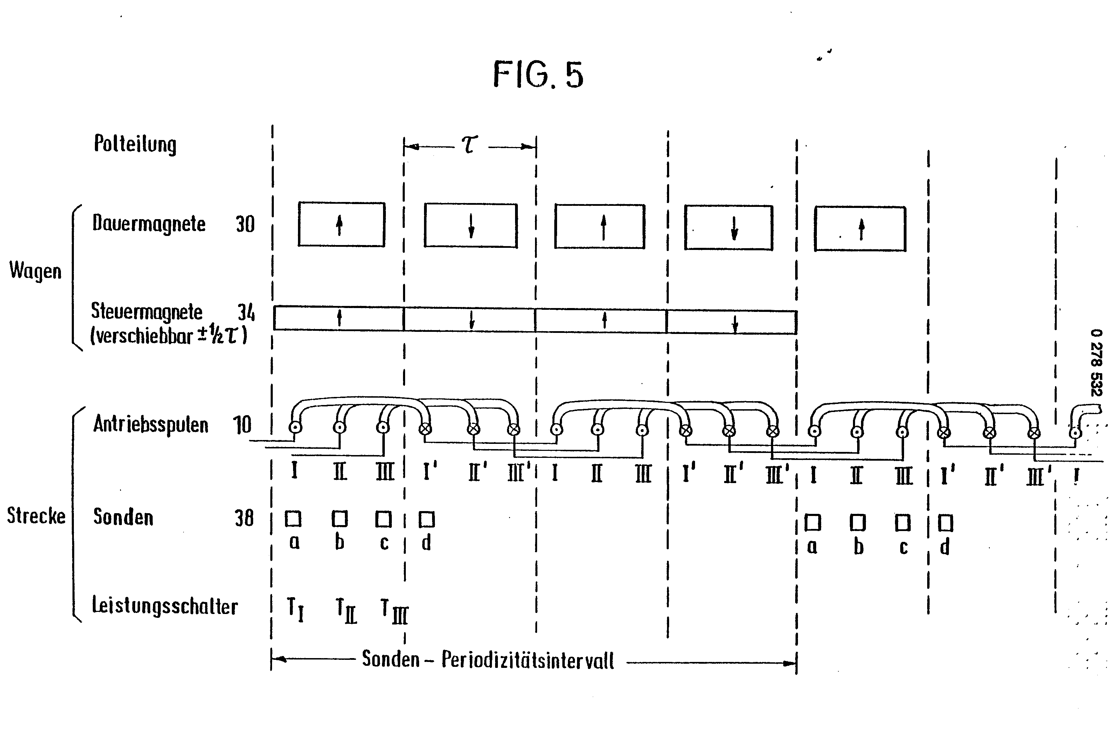

Anhand der Figuren 5 bis 21 wird nun eine bevorzugte Ausführungsform eines aus Linearantrieb und Steuerelektronik bestehenden Linearantriebssystems mit einigen Variationen erläutert.

Fig. 5 zeigt schematisch Stromleiter bzw. Spulen 10, deren Queräste, die einem Statorpol zugeordnet sind, mit I, II und III bezeichnet sind, während deren andere Queräste, die in der Zeichnung im rechts daneben befindlichen Statorpol angeordnet sind, mit I', II' und III' bezeichnet sind. Innerhalb eines Abschnittes des Stators sind die gleichzähligen Spulen alle hintereinandergeschaltet, wie es in Fig. 5 angedeutet ist. Die gleichzähligen Spulen eines Abschnittes können jedoch auch parallel zueinander geschaltet sein. In Fig. 5 sind ganz oben die am Läufer 32 angeordneten Dauermagnete 30 dargestellt, und zwar pro Statorpolteilung $\tau$ einer. Dabei wechseln sich Dauermagnete mit zum Stator weisendem Südpol und Dauermagnete mit zum Stator weisendem Nordpol ab (im folgenden kurz "Südpol-Magnet" bzw. "Nordpol-Magnet" genannt).

Zwischen den als Antriebsspulen wirkenden Statorspulen 10 und den Dauermagneten 30 sind, ebenfalls schematisch, die Steuermagnete 34 dargestellt, die in der Statorpoleinteilung ebenfalls abwechselnd Nordpol-und Südpol-Dauermagnete sind. Diese Steuermagnete 34 sind auf der bereits erwähnten Stange 36 angeordnet und sind mit dieser in Bewegungsrichtung des Läufers bzw. Des Wagens 20 relativ zu den Dauermagneten 30 verschiebbar. Bei der in Fig. 5 schematisch dargestellten Ausführungsform weist der Wagen fünf Dauermagnete 30 und vier Steuermagnete 34 auf.

In Fig. 5 sind unterhalb der Statorspulen 10 als Rechtecke schematisch Hallsonden 38 dargestellt. Dabei sind die Hallsonden a den in Fig.5 linken Querästen der Spulen I, die Hallsonden b den linken Querästen der Spulen II und die Hallsonden c den linken Querästen der Spulen III zugeordnet. In der bevorzugten Ausführungsform sind die Hallsonden a, b und c zu Hallsonden gruppen zusammengefaßt, die je im Bereich eines Statorpols angeordnet sind und zwischen sich Lücken aufweisen, die von der Länge der Steuermagnetreihe abhängen. Bei der in Fig. 5 dargestellten Ausführungsform, bei der fünf Dauermagnete 30 und vier verschiebbare Steuermagnete 34 vorgesehen sind, folgt auf jede Hallsondengruppe a, b, c eine Lücke entsprechend dreier Statorpolbreiten.

Man könnte nun Hallsonden zum Einsatz bringen, die sowohl auf Nordpol-als auch auf Südpol-Dauermagnete ansprechen. Da unterschieden werden müßte, ob sich über einer bestimmten Spule 10 ein Nordpol-oder ein Südpol-Dauermagnet befindet, müßten am Ausgang der Hallsonden drei verschiedene Informationen verarbeitet werden, nämlich

1. ein Südpol beeinflußt die Hallsonde,

2. ein Nordpol beeinflußt die Hallsonde und

3. die Hallsonde ist außer Einfluß durch einen Magneten.

Ein solches System mit drei unterschiedlichen Informationen würde man zweckmäßigerweise nicht mit binären Digitalschaltungen weiterverarbeiten, sondern mit Digitalschaltungen, die auf die Verarbeitungen dreier unterschiedlicher Signalzustände eingerichtet sind.

Bei der in Fig. 5 dargestellten bevorzugten Ausführungsform verwendet man Hallsonden 38, die nur auf Nordpol-oder nur auf Südpol-Dauermagneten ansprechen. Für die weitere Beschreibung wird vereinfachend vorausgesetzt, daß die Hallsonden 38 nur auf Südpol-Dauermagneten ansprechen.

Wie bereits erwähnt, wird bei der bevorzugten Ausführungsform die Spulenstrecke eines jeden Statorabschnittes nicht mittels Hallsonden am Abschnittanfang eingeschaltet und mittels Hallsonden am Abschnittende ausgeschaltet, sondern die Spulenstrecke eines Abschnittes bleibt dadurch eingeschaltet, daß während der gesamten Aufenthaltszeit des sich bewegenden Wagens im Abschnitt von den Steuermagneten immer Hallsonden beeinflußt sind. Bei der bevorzugten Ausführungsform nach Fig. 5 hat man nun eine Einsparung von Hallsonden dadurch erreicht, daß man in den Lücken zwischen aufeinanderfolgenden Hallsondengruppen a, b, c Einzelhallsonden d angeordnet hat. Und zwar an solchen Stellen, daß diese Einzelhallsonden d dann von einem Südpol-Steuermagnet 34 beeinflußt werden, wenn sich unter dem Steuermagneten 34 befindliche Hallsondengruppen a, b, c nur unter einem Nordpol-Steuermagneten 34 befinden, auf den sie nicht ansprechen. Während bei einer Beeinflussung von Hallsonden a, b, c durch einen Südpol-Steuermagneten die Queräste I, II bzw. III der Spulen beispielsweise in einer in Fig. 5 in die Zeichenebene hineinzeigenden Richtung von Strom durchflossen werden, muß lediglich dafür gesorgt werden, daß dann, wenn nur die Einzelhallsonde d von einem Südpol-Steuermagneten beeinflußt wird, nicht aber die Hallsonden a, b, c, die Stromrichtung durch die Antriebsspulen umgekehrt wird.

Allgemein kann man also sagen, daß die Hallsondengruppen a, b, c und die Einzelhallsonde d derart entlang des Stators verteilt sind, daß immer mindestens eine Hallsonde der Hallsondengruppe a, b, c oder mindestens eine Einzelhallsonde d von einem Südpol-Steuermagneten beeinflußt ist.

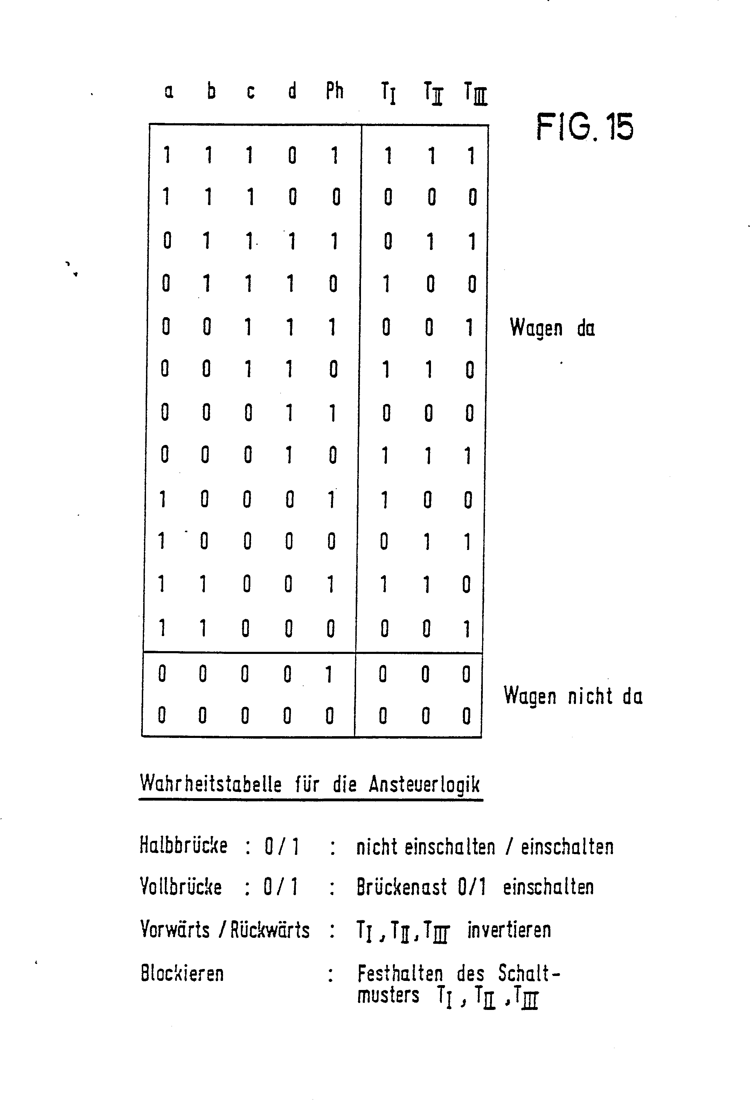

Die Ansteuerung der einzelnen Spulen 10 wird weiter unten noch ausführlicher anhand der Wahrheitstabelle in Fig.15 erläutert.

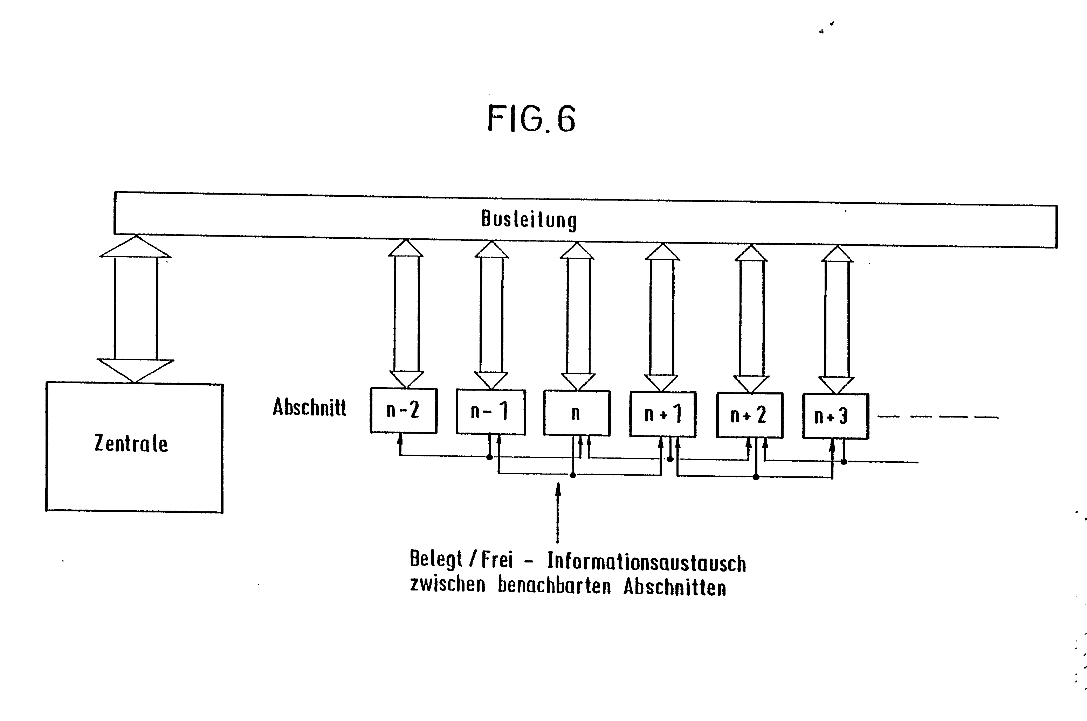

Fig. 6 zeigt eine Einteilung des linearen Stators 2 in eine Vielzahl von einzelnen Abschnitten n-2, n-1, n, n+1 ..., die je mittels einer Eingabe/Ausgabeschaltung 200 mit einer Busleitung 202 verbunden sind. Diese stellt eine Verbindung zwischen den einzelnen Abschnitten und einer Zentrale 204 her, mittels welcher das gesamte Linearantriebssystem gesteuert werden kann.

Die einzelnen Abschnitte sind mit den benachbarten Abschnitten verbunden, wie in Fig. 6 unterhalb der Abschnitte dargestellt ist. Diese Verbindungen dienen dazu, beim Wechsel des sich bewegenden Wagens 20 von einem zum nächsten Abschnitt sicherzustellen, daß immer nur ein Abschnitt seine Daten über die Busleitung 202 an die Zentrale gibt. Beispielsweise wird jeweils dem Abschnitt mit höherer Numerierung, im folgenden höherer Abschnitt genannt, vor dem Abschnitt niedrigerer Numerierung, im folgenden niedrigerer Abschnitt genannt, Priorität zuerkannt. Dies geschieht dadurch, daß dann, wenn sich der bewegte Wagen 20 beim Wechsel vom einen zum anderen Abschnitt vorübergehend auf Teilen beider Abschnitte befindet, der höhere Abschnitt den niedrigeren Abschnitt an einer Informationsabgabe an die Busleitung 202 hindert.

Wird die Netzwechselspannung einem Drehstromnetz entnommen, kann man zu dessen gleichmäßiger Auslastung die einzelnen Abschnitte der Reihe nach zugleich mit den unterschiedlichen Phasen des Drehstromnetzes verbinden. In Fig. 6 könnte man beispielsweise die Abschnitte n-2 und n+1 mit der R-Phase, die Abschnitte n-1 und n+2 mit der S-Phase und die Abschnitte n und n+3 mit der T-Phase verbinden.

Dieses Linearantriebssystem eignet sich auch für das gleichzeitige Antreiben mehrerer voneinander beabstandeter Wagen 20. Hierfür kann man beispielsweise jedem Abschnitt einen Speicher zuordnen, dessen Speicherinhalt den Zustand des jeweiligen Abschnittes anzeigt. Die Zentrale 204 kann dann über die Busleitung 202 in vorbestimmten kurzen Zeitabständen reihum die Inhalte der den einzelnen Abschnitten zugeordneten Speicher abfragen. Zu diesem Zweck können die einzelnen Speicher adressierbar und mittels Adressenwörtern anwählbar sein.

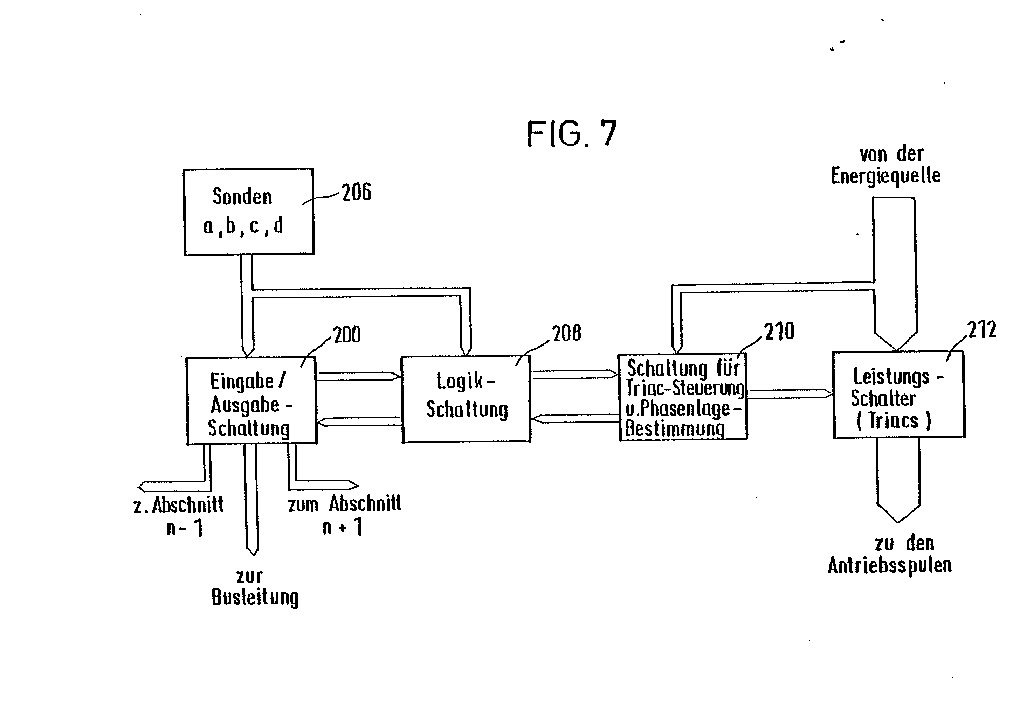

Fig. 7 zeigt ein Blockdiagramm eines Abschnittes, wobei es sich um den Abschnitt n handeln soll. Der Block 206 stellt die im folgenden kurz Sonden genannten Hallsonden a, b, c, d dar. Deren Ausgangssignale werden einerseits auf die Eingabe/Ausgabeschaltung 200 und andererseits auf eine Logikschaltung 208 geführt. Die Eingabe/Ausgabeschaltung 200 ist sowohl mit der Busleitung 202 verbunden als auch mit den benachbarten Abschnitten n-1 und n + 1. Sobald sich im Abschnitt n ein Wagen 20 befindet, wird dies an den niedrigeren Abschnitt n-1 gemeldet. Wenn sich andererseits ein Wagen 20 im nächst höheren Abschnitt n + 1 befindet, wird dies der Eingabe/Ausgabeschaltung des Abschnittes n gemeldet. Über die Eingabe/Ausgabeschaltung gelangen von der Zentrale 204 über die Busleitung 202 Steuerbefehle, beispielsweise bezüglich der maximalen Geschwindigkeit $v_{max}$ und des maximalen Vorschubes $F_{max}$, an die Logikschaltung 208. In der Logikschaltung 208 wird anhand der von den Sonden a, b, c kommenden Sondensignale und eines Phasenlagesignals, das unten noch näher erläutert wird, ein Spulenerregungsmuster für die Spulen 10 dieses Abschnittes n erzeugt. Außerdem bildet die Logikschaltung 208 ein Belegt-Signal dann, wenn sich ein Wagen 20 in diesem Abschnitt befindet. Dieses Belegt-Signal wird auf die Eingabe/Ausgabeschaltung 200 gegeben. Das in der Logikschaltung 208 gebildete Spulenerregungsmuster wird auf eine Schaltung 210 zur Steuerung der Halbleiterschalter, im bevorzugten Ausführungsbeispiel in Form von Triacs gegeben. Am Ausgang der Schaltung 210 steht ein Triac-Treibersignal zur Verfügung, das auf die Steuerelektroden der den einzelnen Spulen 10 zugeordneten Triacs geführt wird. Mit Hilfe der Triacs wird den Antriebsspulen 10 entsprechend dem von der Logikschaltung 208 gebildeten Erregungsmuster aus der Energiequelle, nämlich der zur Spulenerregung verwendeten Wechselspannungsquelle, Erregungsenergie zugeführt.

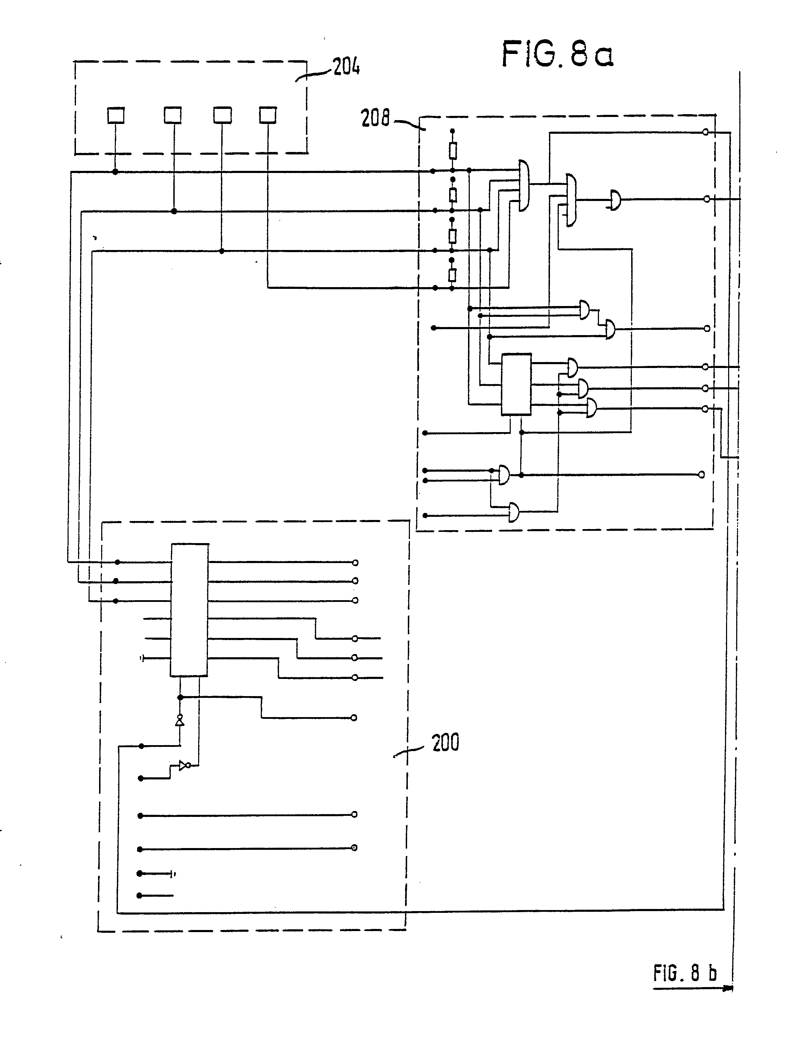

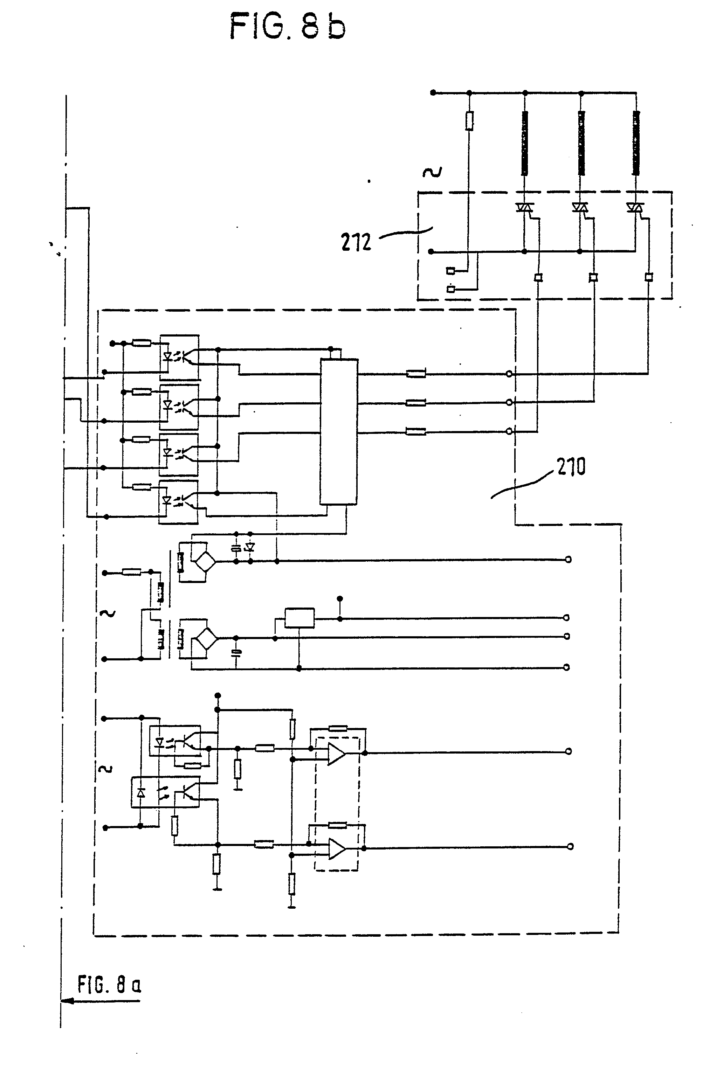

Die wesentlichsten Schaltungsteile des in Fig. 7 gezeigten Blockdiagramms sind in dem in Fig. 8 dargestellten Schaltbild enthalten. In diesem sind die einzelnen Blöcke der Fig. 7 gestrichelt angedeutet. Diese einzelnen Blöcke werden nun anhand der Fig. 8 bis 13 näher erläutert.

In den Figuren 8 , 11 und 12 sind die Eingangsanschlüsse der jeweiligen Schaltung durch volle Punkte und die Ausgangsanschlüsse dieser Schaltung durch Kreise gekennzeichnet.

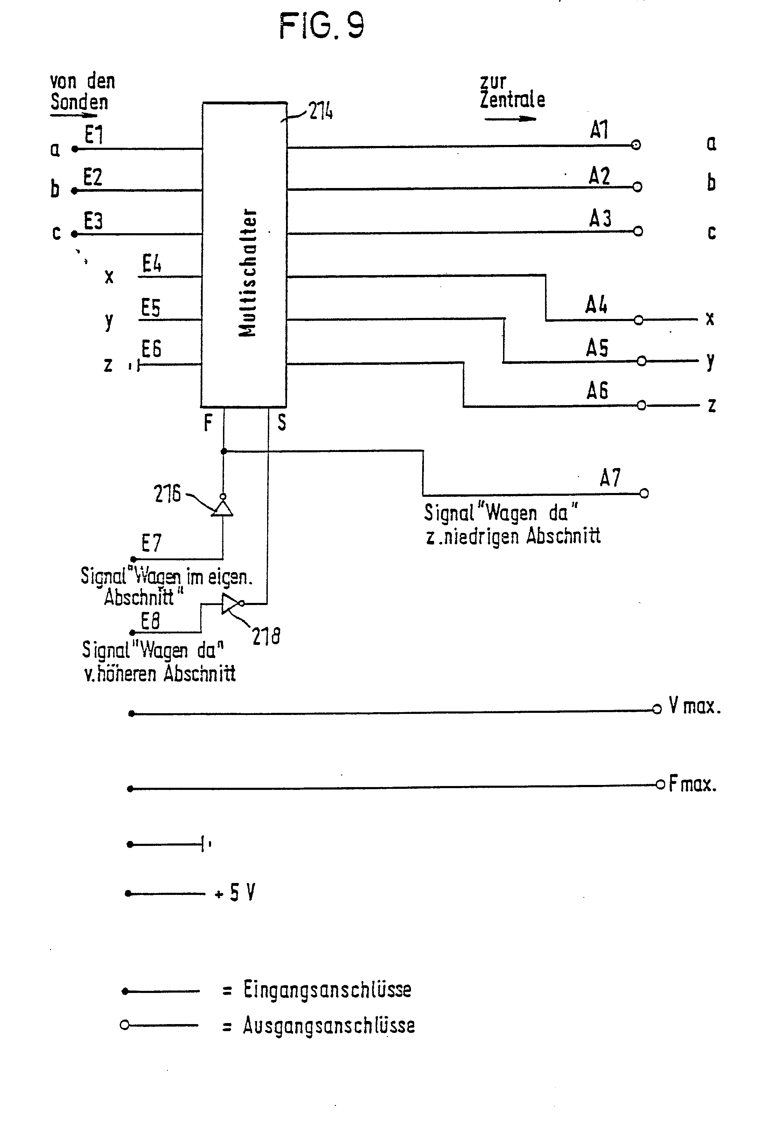

Kernstück der Eingabe/Ausgabeschaltung in Fig. 9 ist ein Multischalter 214, der vorzugsweise als Tri-State-Schaltung ausgebildet ist. Dieser Multischalter ist mit einem Freigabeanschluß F und einem Sperranschluß S versehen. Bei Freigabe mittels eines dem Freigabeanschluß F zugeführten Freigabesignals werden die an Eingangsanschlüssen $E_1$ bis $E_6$ anliegenden Signale zu den entsprechenden Ausgangsanschlüssen $A_1$ bis $A_6$ durchgeschaltet und stehen dann an diesen Ausgangsanschlüssen zur Weitergabe über die Busleitung 202 zur Zentrale 204 zur Verfügung. Den Eingangsanschlüssen $E_1$ bis $E_3$ werden die Sondensignale der Hallsonden a, b, c zugeführt. An den Eingangsanschlüssen $E_4$ bis $E_6$ liegen Signalwerte an, die eine Kodierung der Nummer des jeweiligen Abschnittes, beispielsweise des Abschnittes n, darstellen.

Wenn sich ein Wagen 20 im jeweils betrachteten Abschnitt, im folgenden "eigener Abschnitt" genannt, befindet, wird einem Eingangsanschluß $E_7$ ein Signal "Wagen im eigenen Abschnitt" zugeführt, das nach dem Passieren eines Inverters 216 auf den Freigabeanschluß F des Multischalters 214 gelangt und den Multischalter 214 auf Durchlässigkeit schaltet. Das heißt, wenn sich der Wagen 20 im eigenen Abschnitt befindet, werden die jeweils von den Hallsonden a, b, c abgegebenen Signale zusammen mit der kodierten Abschnittnummer zur Zentrale 204 weitergegeben.

Der Sperreingang S des Multischalters 214 ist über einen Inverter 218 mit dem höheren Abschnitt, im betrachteten Beispiel also mit dem Abschnitt n + 1, verbunden. Sobald sich eine Wagen 20 im höheren Abschnitt befindet, wird dies über einen Eingangsanschluß $E_8$ gemeldet und bewirkt ein Sperren des Multischalters 214 selbst dann, wenn über den Freigabeanschluß F dieses Multischalters ein Freigabesignal empfangen wird, das bedeutet, daß sich der Wagen 20 auch im eigenen Abschnitt befindet. Das heißt, dem Abschnitt mit der höheren Nummer wird Priorität bei der Informationsmeldung zur Zentrale 204 eingeräumt. Eine Freigabe des Multischalters 214 des eigenen Abschnittes ist somit nur dann möglich, wenn sich der Wagen 20 im eigenen Abschnitt befindet und nicht gleichzeitig auch im höheren Abschnitt. Damit wird vermieden, daß der Zentrale vorübergehend von zwei Abschnitten gleichzeitig Information zugeführt wird.

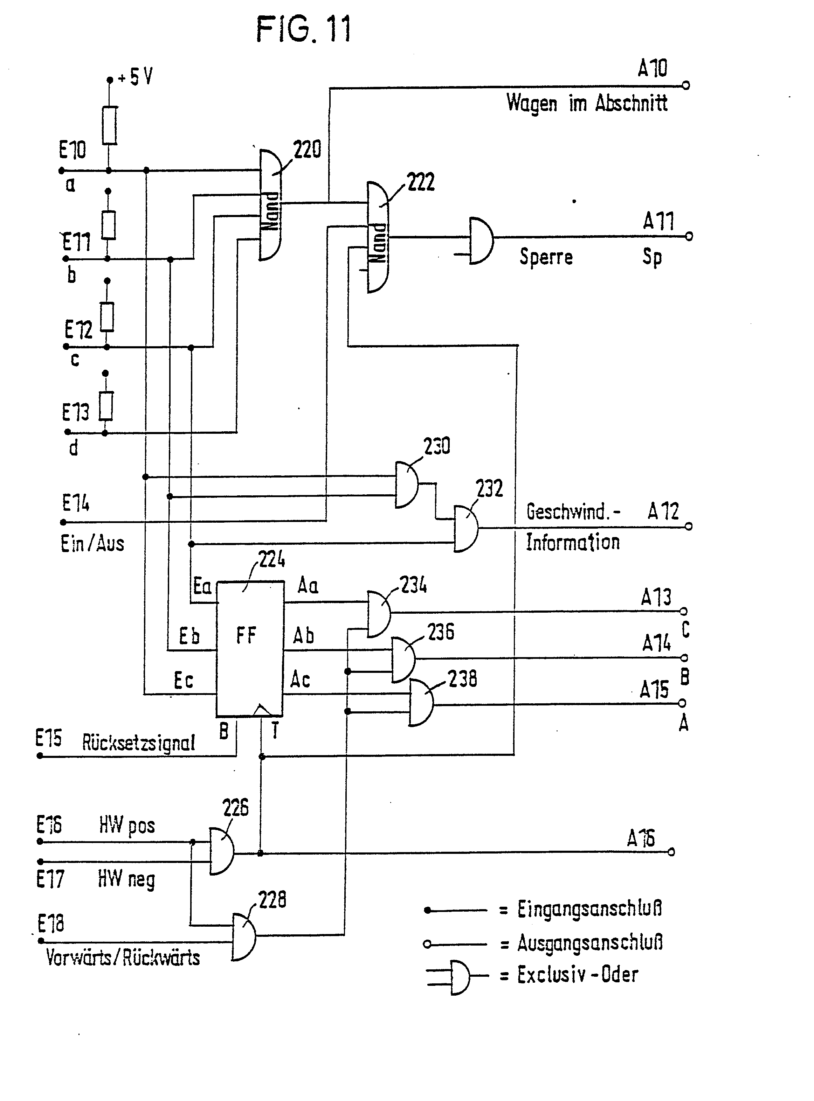

Fig. 11 zeigt einen möglichen Aufbau der Logikschaltung 208. Diese Schaltung weist Eingangsanschlüsse $E_{10}$ bis $E_{18}$ und Ausgangsanschlüsse $A_{10}$ bis $A_{16}$ auf. Den Eingangsanschlüssen $E_{10}$ bis $E_{12}$ werden die Sondensignale der Sonden a, b, c zugeführt, während der Eingangsanschluß $E_{13}$ mit dem Sondensignal von der Einzelsonde d beaufschlagt wird. Diese den Eingangsanschlüssen $E_{10}$ bis $E_{13}$ zugeführten Sondensignale werden auf vier Eingänge einer NAND-Schaltung 220 geführt. An den Eingängen der NAND-Schaltung 220 erscheint der Logikwert "0", wenn die jeweilige Hallsonde von einem der am Wagen 20 angeordneten Steuermagneten beeinflußt wird, das heißt wenn die Hallsonde meldet, daß der Wagen da ist. Hallsonden, die nicht vom Wagen beeinflußt sind, geben auf den zugehörigen Eingang der NAND-Schaltung 220 den Logikwert "1", der einem Spannungswert von + 5V entspricht. Sobald eine oder mehrere der Sonden a, b, c, d die Anwesenheit eines Wagens 20 im zugehörigen Abschnitt feststellen, erscheint am Ausgang der NAND-Schaltung 220 der Logikwert "1". Dieser Logikwert steht

am Ausgangsanschluß $A_{10}$ als Information dafür, daß sich im eigenen Abschnitt ein Wagen befindet, zur Verfügung. Diese Information wird auf den Eingangsanschluß $G_7$ der Eingabe/Ausgabeschaltung 200 geführt und zur Freigabe des Multischalters 214 im eigenen Abschnitt verwendet. Nach Inversion im Inverter 216 der Eingabe/Ausgabeschaltung wird diese Information außerdem über den Ausgangsanschluß $A_7$ der Eingabe/Ausgabeschaltung auf den Sperreingang des Multischalters 214 des niedrigeren Abschnittes geführt.

Die über die Eingangsanschlüsse $E_{10}$ bis $E_{12}$ der Logikschaltung 208 zugeführten Sondensignale der Hallsonden a, b, c werden außerdem auf Eingänge $E_a$, $E_b$ bzw. $E_c$ eines Zwischenspeichers in Form eines getakteten Flipflops 224 gegeben. Dieses Flipflop 224 ist mit einem Takteingang T versehen. Bei Zuführung eines Taktsignals an den Takteingang T, genauer gesagt beim Auftreten der Rückflanke des Taktimpulses, werden die an den Eingangsanschlüssen $E_a$, $E_b$ und $E_c$ anlegenden Sondensignalwerte auf die Ausgangsanschlüsse $A_a$, $A_b$ bzw. $A_c$ des Flipflops 224 gegeben. Das Signalmuster an den Ausgangsanschlüssen $A_a$ bis $A_c$ des Flipflops 224 bestimmt jeweils das Erregungsmuster der Antriebsspulen 10.

Über einen Anschluß B kann dem Flipflop 224 vom Eingangsanschluß $E_{15}$ her ein Rücksetzsignal zugeführt werden. Solange das Rücksetzsignal anliegt, wird ein dem Rücksetzzustand entsprechendes Signalmuster an den Ausgangsanschlüssen $A_a$ bis $A_c$ des Flipflops 224 gebildet und aufrechterhalten. Ein im eigenen Abschnitt befindlicher Wagen kann mit Hilfe diese Rücksetzsignals im Stehen blockiert werden, womit man die Funktion einer "Feststellbremse" verwirklichen kann.

Anstelle des Rücksetzsignals kann ein Blockiersignal verwendet werden, das einem Eingang einer (in der Zeichnung nicht gezeigten) Tor-Schaltung zugeführt wird, deren Ausgang mit dem Takteingang des Flipflop 224 verbunden ist und deren zweitem Eingang das Taktsignal für das Flipflop 224 zugeführt wird. Solange das Blockiersignal anliegt, kann das Taktsignal das Flipflop 224 nicht umschalten.

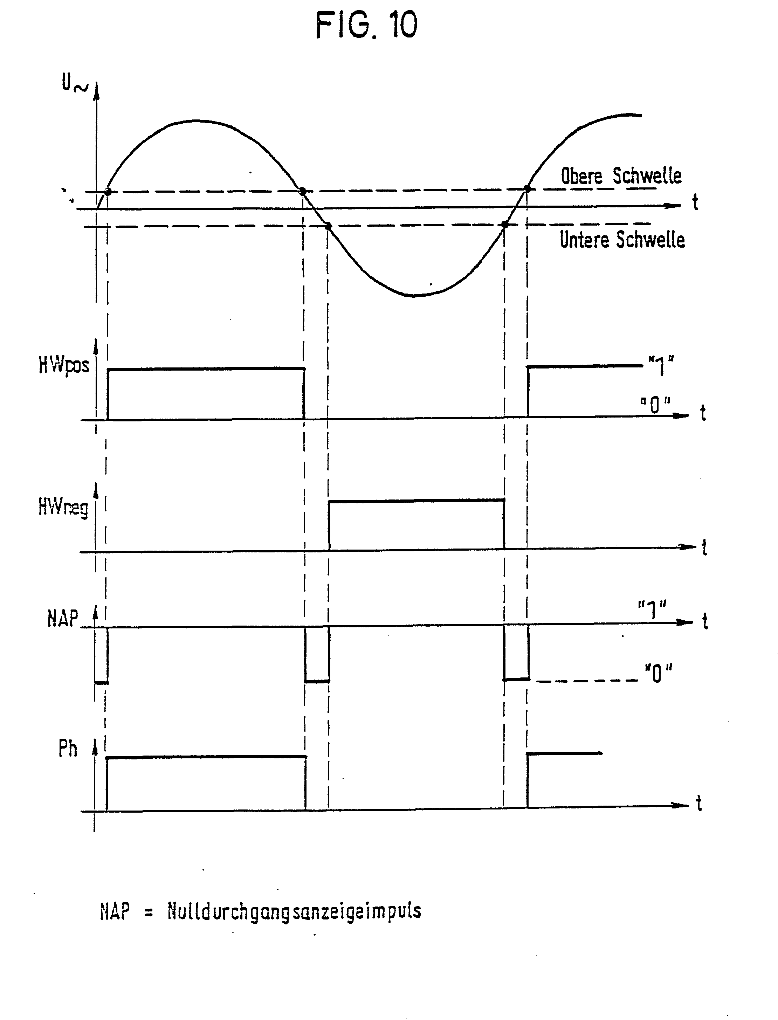

Als Taktsignale für das Flipflop 224 werden Nulldurchgangsanzeigeimpulse NAP (Fig. 10 ) verwendet, die jeweils den Nulldurchgang der zur Spulenerregung verwendeten Netzwechselspannung anzeigen. Damit wird erreicht, daß mit Beginn jeder neuen Halbwelle dieser Netzwecheslspannung mit Hilfe der Triacs ein neues Spulenerregungsmuster eingestellt werden kann. Diese Nulldurchgangsanzeigeimpulse werden mit Hilfe einer EXKLUSIV-ODER-Schaltung 226 erzeigt, deren zwei Eingängen über die Eingangsanschlüsse $E_{16}$ und $E_{17}$ Halbwelle-Positiv-Impulse $HW_{pos}$ bzw.

Halbwelle-Negativ-Impulse $HW_{neg}$ zugeführt. Wie weiter unten noch erläutert wird, sind diese Halbwellenimpulse $HW_{pos}$ und $HW_{neg}$ etwas kürzer als die zugehörigen Halbwellen der Netzwechselspannung, so daß zwischen aufeinanderfolgenden Halbwellenimpulsen Lücken auftre ten. Während dieser Lücken, also im Bereich der Nulldurchgänge der Netzwechselspannung, geht der Ausgang der EXKLUSIV-ODER-Schaltung 226 auf den Logikwert "0", während er während des Vorhandenseins des einen oder des anderen Halbwellen-Impulses den Logikwert "1" einnimmt. Beim Übergang des Ausgangs der EXKLUSIV-ODER-Schaltung 226 vom Logikwert "0" auf den Logikwert "1" zu Beginn eines neuen Halbwellenimpulses wird das Flipflop 224 getaktet. Das heißt, mit Beginn eines neuen Halbwellen-Impulses wird das am Eingang des Flipflops 424 anliegende Sondensignalmuster auf den Ausgang des Flipflops gegeben.

Der NAND-Schaltung 220 ist eine weitere NAND-Schaltung 222 nachgeschaltet, die in der in Fig. 11 bezeigten Ausführungsform wie die NAND-Schaltung 220 vier Eingänge aufweist. Der oberste Eingang der NAND-Schaltung 220 ist mit dem Ausgang der NAND-Schaltung 220 verbunden. Der darunterliegende Eingang der NAND-Schaltung 222 ist mit einem Eingangsanschluß $E_{14}$ der Logikschaltung 208 verbunden, über den Information über den Einschalt/Ausschalt-Zustand des Abschnittes oder des gesamten Linearantriebssystems zugeführt werden kann. Ein dritter Eingang der NAND-Schaltung 222 ist mit dem Ausgang der EXKLUSIV-ODER-Schaltung 226 verbunden. Am Ausgang der NAND-Schaltung 222 und damit an Ausgangsanschluß $A_{11}$ der Logikschaltung 208 erscheint ein Sperrsignal $S_p$ dann, wenn entweder mittels der Hallsonden festgestellt wird, daß sich im eigenen Abschnitt kein Wagen befindet, oder wenn der Abschnitt bzw. das Linearantriebssystem ausgeschaltet ist oder solange der Nulldurchgangsanzeigeimpuls NAP vorliegt.

Zwei EXKLUSIV-ODER-Schaltungen 230 und 232, die in der in Fig. 11 dargestellten Weise verschaltet sind, bilden einen Paritätsgenerator, der aus den Sondensignalen der Hallsonden a, b und c bei einem sich durch den eigenen Abschnitt bewegenden Wagen 20 eine Impulsfolge abgibt, deren Folgefrequenz von der Geschwindigkeit des Wagens abhängt. Diese Geschwindigkeitsinformation wird über den Ausgangsanschluß $A_{12}$ in einer in der Zeichnung nicht dargestellten Weise an die Zentrale 204 übertragen. Die Zentrale ist daher über die jeweilige Geschwindigkeit des Wagens bzw. der Wagen unterrichtet.

Eine EXKLUSIV-ODER-Schaltung 228, der an einem Eingang die Halbwellen-Impulse $HW_{pos}$ und über einen zweiten Eingang ein Vorwärts/Rückwärts-Signal zuführbar ist, ist ausgangsseitig mit je einem Eingang von drei EXKLUSIV-ODER-Schaltungen 234, 236 und 238 verbunden. Jeder dieser EXKLUSIV-ODER-Schaltungen wird über einen zweiten Eingang eines der im Flipflop 324 zwischengespeicherten Sondensignale zugeführt. Die drei EXKLUSIV-ODER-Schaltungen 234, 236 und 238 bilden zusammen einen - schaltbaren Inverter. In Abhängigkeit davon, ob über den Eingangsanschluß $E_{18}$ der Logikschaltung 208 ein Vorwärts-oder ein Rückwärtsbefehlssignal zugeführt wird, läßt der schaltbare Inverter die von den Ausgangsanschlüssen $A_a$, $A_b$ und $A_c$ des Flipflop 224 kommenden Sondensignale unverändert oder invertiert zu den Ausgangsanschlüssen $A_{13}$, $A_{14}$ und $A_{15}$ der Logikschaltung gelangen.

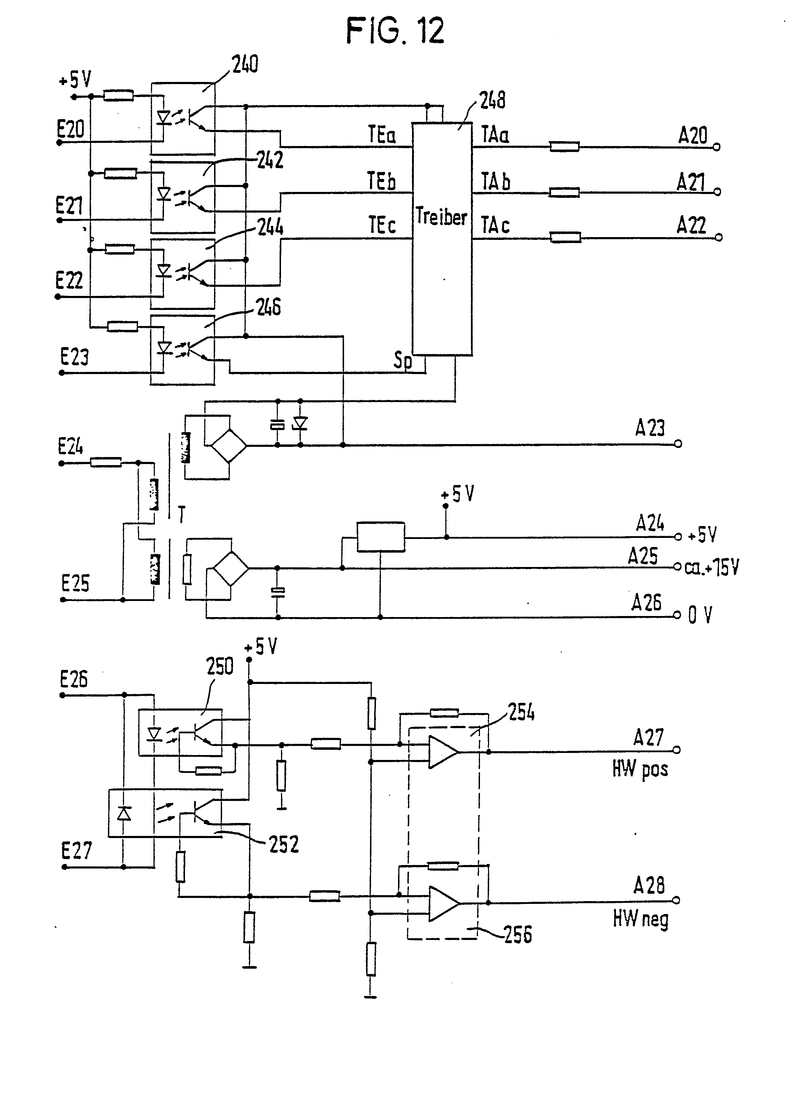

Die Schaltung 210 zur Triacsteuerung und zur Phasenlagebestimmung ist in Fig. 12 dargestellt. Diese Schaltung weist Eingangsanschlüsse $E_{20}$ bis $E_{27}$ und Ausgangsanschlüsse $A_{20}$ bis $A_{28}$ in der in Fig. 12 gezeigten Reihenfolge auf. Die Eingangsanschlüsse $E_{20}$, $E_{21}$ und $E_{22}$ sind mit den Ausgangsanschlüssen $A_{13}$, $A_{14}$ bzw. $A_{15}$ der Logikschaltung 208 (Fig.11 ) verbunden. Somit erhalten sie die vom Zwischenspeicher-Flipflop 224 abgegebenen Sondensignalmuster, gegebenenfalls nach Inversion durch den schaltbaren Inverter mit den EXKLUSIV-ODER-Schaltungen 234, 236 und 238. Die den Sondensignalen der Sonden a, b, c entsprechenden Erregungssignale an den Eingangsanschlüssen $E_{20}$, $E_{21}$, $E_{22}$ werden je über einen zugeordneten Optokoppler 240, 242 bzw. 244 auf entsprechende Eingänge $TE_a$, $TE_b$ bzw. $TE_c$ einer schaltbaren Treiberschaltung 248 gegeben. In dieser Treiberschaltung werden die ihr zugeführten Signale verstärkt, beispielsweise mittels Darlington-Verstärkern. Die an den Ausgängen $TA_a$, $TA_b$ und $TA_c$ zur Verfügung stehenden Treibersignale werden zum steuernden Schalten der Triacs einer Direktumsetzer-Halbbrückenschaltung verwendet.

Der Eingangsanschluß $E_{23}$ der Schaltung 210 ist mit dem Ausgangsanschluß $A_{11}$ der Logikschaltung 208 verbunden, an dem für den Fall, daß entweder kein Wagen im Abschnitt ist oder der eigene Abschnitt bzw. Das Linearantriebssystem ausgeschaltet ist oder gerade ein Nulldurchgangsanzeigeimpuls vorhanden ist, ein Sperrsignal $S_p$ anliegt. Über einen Optokoppler 246 wird dieses Sperrsignal auf einen Sperreingang SP der Treiberschaltung 248 geführt. Solange das Sperrsignal Sp vorhanden ist, ist die Treiberschaltung 248 gesperrt, das heißt, kann die Treiberschaltung 248 keine Ausgangssignale an die Triacs liefern. Während des Vorhandenseins des Sperrsignals Sp ist also ein Schalten der Triacs nicht möglich.

Den Eingangsanschlußpaaren $E_{24}$, $E_{25}$ und $E_{26}$, $E_{27}$ wird je die Netzwechselspannung zugeführt. Über einen den Eingangsanschlüssen $E_{24}$ und $E_{25}$

nachgeschalteten Transformator T werden Versorgungsspannungen für die Treiberschaltung 248, die Logikschaltung 208 und die Eingabe/Ausgabe-Schaltung 200 erzeugt.

Aus der über den Eingangsanschlüssen $E_{26}$ und $E_{27}$ anliegenden Netzwechselspannung werden die Halbwellenimpulse gewonnen. Dies geschieht mit zwei Optokopplern 250 und 252, von denen der eine während der positiven Halbwelle und der andere während der negativen Halbwelle ein Ausgangssignal liefert. Die Ausgangssignale der Optokoppler gelangen je auf eine Schwellenwertschaltung in Form eines Schmitt-Triggers 254 bzw. 256, die zu einer integrierten Schaltung zusammengefaßt sind. Mit den Schwellenwertschaltungen 254 und 256 wird erreicht, daß ein Halbwellen-Impuls nur so lange erzeugt wird, wie die Netzwechselspannung einen vorbestimmten positiven bzw. negativen Schwellenwert überschreitet. Die Halbwellen-Impulse $HW_{pos}$ und $HW_{neg}$ treten also nur dann auf, wenn die Wechselspannung aus dem Nulldurchgangsbereich heraus ist. Die an den Ausgangsanschlüssen $A_{27}$ und $A_{28}$ auftretenden Halbwellen-Impulse werden auf die Eingangsanschlüsse $E_{16}$ bzw. $E_{17}$ der Logikschaltung 208 gegeben. Aufgrund des Einsatzes der Schwellenwertschaltungen 254 und 256 in der Schaltung 210 wird erreicht, daß der Nulldurchgangsanzeigeimpuls am Ausgang der EXKLUSIV-ODER-Schaltung 226 der Logikschaltung 208 eine solche Breite hat, daß er einen vorbestimmten Bereich um den Wechselspannungsnulldurchgang herum überdeckt. Da am Ausgang der NAND Schaltung 222 ein Sperrsignal Sp, das die Treiberschaltung 248 sperrt, auf jeden Fall während der Dauer des Nulldurchgangsanzeigeimpulses auftritt, kann in diesem Bereich um den Wechselspannungsnullpunkt herum kein Triac geschaltet werden. Da das getaktete Flipflop 224 erst beim Auftreten der Rückflanke des Nulldurchgangsanzeigeimpulses umschaltet, ist auch vom Flipflop 224 her dafür gesorgt, daß in diesem Bereich um den Wechselspannungsnulldurchgang ein Umschalten der Triacs verhindert ist.

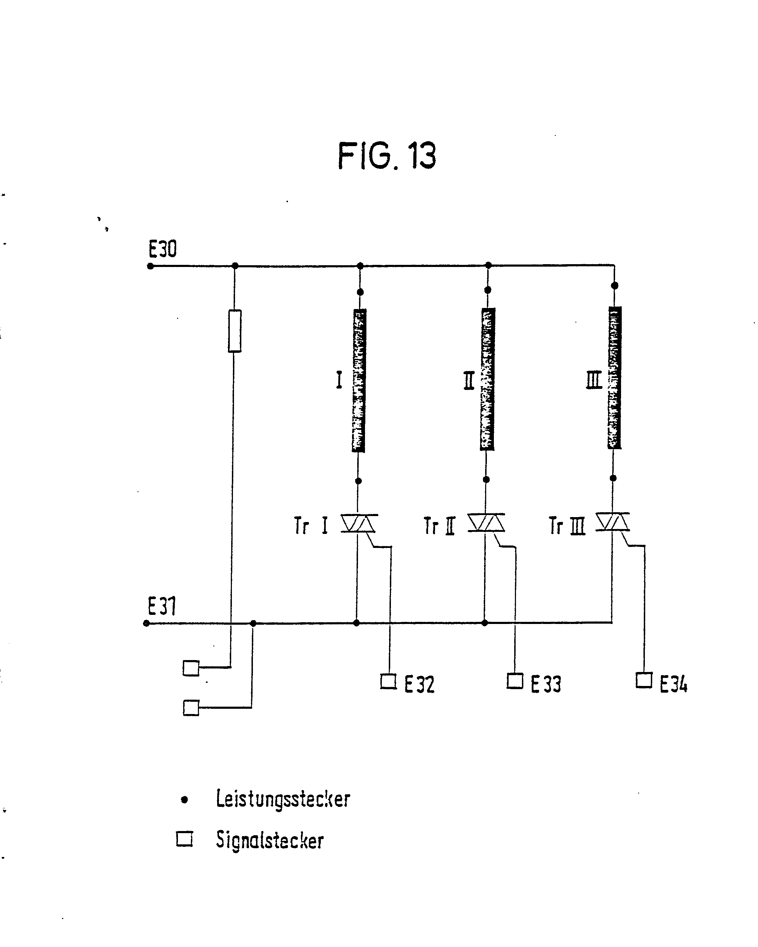

Eine Halbbrückenschaltung ist in Fig. 13 gezeigt. Diese Halbbrückenschaltung weist drei Brückenzweige auf, die je eine Reihenschaltung aus den hintereinandergeschalteten Spulen I bzw. II bzw. III des eigenen Abschnittes und einem als gesteuerter Halbleiterschalter diendenden Triac $T_I$ bzw. $T_{II}$ bzw. $T_{III}$ aufweisen. Über Eingangsanschlüssen $E_{30}$ und $E_{31}$ der Halbbrückenschaltung liegt die zur Spulenerregung verwendete Netzwechselspannung.

Der Eingangsanschluß $E_{31}$ ist mit dem Ausgangsanschluß $A_{23}$ der Schaltung 210 verbunden, um für die Ansteuerung der Triac-Zündelektroden über Eingangsanschlüsse $E_{32}$, $E_{33}$, $E_{34}$, die mit den Ausgangsanschlüssen $A_{20}$, $A_{21}$, $A_{22}$ der

Schaltung 210 verbunden sind, definierte Bezugspotentialverhältnisse zu gewährleisten.

Wenn ein Sondensignal, das die Anwesenheit eines Wagens im eigenen Abschnitt signalisiert, vorhanden ist, führt dies nach der Zwischenspeicherung im Flipflop 224 und nach der Verstärkung in der Treiberschaltung 248, gegebenenfalls nach einer Inversion im schaltbaren Inverter 234, 236, 238, zu einem Zünden bzw. Durchschalten des zugehörigen der Triacs $T_I$, $T_{II}$ bzw. $T_{III}$. Wenn man einen einzigen Brückenzweig der Halbbrückenschaltung betrachtet muß man dann, wenn sich ein Wagen 20 im eigenen Abschnitt befindet, dafür sorgen, daß die zugehörige Apulengruppe aus hintereinandergeschalteten Spulen I bzw. II bzw. III jeweils in einer Stromrichtung durchflossen ist, die zu einem solchen Statormagnetfeld führt, daß in Zusammenwirkung mit dem über dieser Spule befindlichen Dauermagneten 30 des Wagens 20 ein Antrieb in der gewünschten Richtung zustande kommt. Dies wird bei der betrachteten Halbbrückenschaltung dadurch erreicht, daß der zugehörige Triac bei passender Phasenlage der zur Spulenerregung verwendeten Wechselspannung, beispielsweise beim Auftreten von deren positiver Halbwelle, eingeschaltet wird, während der anderen Phasenlage, beispielsweise während der negativen Halbwelle der Wechselspannung ausgeschaltet bleibt. Zu diesem Zweck muß ein Phasenlagesignal Ph verfügbar gemacht werden, das anzeigt, ob gerade die positive oder die negative Halbwelle der Wechselspannung vorliegt. Für diesen Zweck kann man eines der beiden an den Ausgangsanschlüssen $A_{27}$ und $A_{28}$ der Schaltung 210 verfügbaren Halbwellensignale verwenden, beispielsweise den die positive Halbwelle anzeigenden Halbwellen-Impuls $HW_{pos}$.

Die Beziehung zwischen der Wechselspannung, den Halbwellen-Impulsen, den Nulldurchgangsanzeigeimpulsen und dem Phasenlagesignal Ph ist in Fig. 10 veranschaulicht, wobei von dem in Fig. 5 schematisch dargestellten Aufbau von Stator und Läufer ausgegangen worden ist. Hallsonden, die von einem Südpol-Steuermagneten des Wagen 20 beeinflußt sind, ist der Logikwert "1" zugeordnet, den nicht beeinflußten Hallsonden der Logikwert "0". Es sei beispielsweise angenommen, daß als Phasenlagesignal Ph der die positive Halbwelle anzeigende Impuls $HW_{pos}$ verwendet wird und dem Phasenlagesignal Ph der Logikwert "1" dann zugeordnet ist, wenn $HW_{pos}$ vorhanden ist.

In Fig.15 geben die Logikwerte in den Spalten unter $T_I$, $T_{II}$ und $T_{III}$ die Schaltzustände der Triacs TrI, TrII, TrIII. Ein Logikwert "1" bedeutet, daß der zugehörige Triac eingeschaltet ist. Wie die Wahrheitstabelle zeigt, stimmt das Logikwert-Muster für die Triacs TrI, TrII, TrIII dann mit dem Logikwert-Muster der Hallsonden a, b, c überein, wenn das Phasenlagesignal Ph den Logikwert "1" aufweist. Weist das Phasenlagesignal Ph dagegen den Logikwert "0" auf, ist das Logikwert-Muster der Triacs TrI, TrII, TrIII zum Logikwert-Muster der Hallsonden a, b, c invertiert. Wenn man bei dem in Fig. 5 dargestellten Aufbau annimmt, daß sich der Wagen mit den Dauermagneten 30 und den Steuermagneten 34 um eine Statorpolbreite $\tau$ nach rechts verschoben hat, wird keine der Hallsonden a, b, c von einem Südpol-Steuermagneten beeinflußt. Daß diese Relativstellung zwischen Wagen bzw. Läufer und Stator vorliegt, wird jedoch mit Hilfe der Einzelsonde d erkannt. In den Zeilen 7 und 8 der Wahrheitstabelle ist dies daran zu erkennen, daß die Logikwerte der Hallsonden a, b, c je "0" sind, der Logikwert der Einzelsonde d jedoch "1" ist. In diesem Fall kommt es zu einer Einschaltung der Triacs TrI, TrII, TrIII, wenn das Phasenlagesignal Ph den Logikwert "0" aufweist, also während der negativen Halbwelle. Hat sich der Läufer bzw. Wagen gegenüber der in Fig. 5 bezeigten Relativstellung gegenüber dem Stator um eine Statorpolteilung $\tau$ nach rechts verschoben, kommt es also zu einer Umkehr der Stromflußrichtung durch die Antriebsspulen. Die Inversion des Logikwert-Musters der Hallsonden a, b, c während der negativen Halbwelle, wenn also das Phasenlagesignal Ph den Logikwert "0" aufweist, entsteht dadurch, daß die EXKLUSIV-ODER-Schaltungen 234, 236, 238 in Fig. 11 während der negativen Halbwelle invertierend wirken. Dies wird mit Hilfe der EXKLUSIV-ODER-Schaltung 228 erreicht, deren einem Eingang über den Eingangsanschluß $E_{128}$ das Vorwärts/Rückwärts-Signal, das beispielsweise von der Zentrale geliefert wird, und deren anderem Eingang über den Eingangsanschluß $E_{16}$ das Positiv-Halbwelle-Signale $HW_{pos}$ zugeführt wird. Am Ausgang der EXKLUSIV-ODER-Schaltung 228 erscheint daher das Halbwellepositiv-Signal direkt oder invertiert, je nachdem ob am Eingangsanschluß $E_{18}$ das Vorwärtssignal oder das Rückwärtssignal anliegt. Daher wirken die EXKLUSIV-ODER-Schaltungen 234, 236, 238 je nach dem Logikwert am Ausgang der EXKLUSIV-ODER-Schaltung 228 durchlässig oder invertierend.

Wird im eigenen Abschnitt keine der Hallsonden a, b, c, d von einem Wagen beeinflußt, das heißt, sind deren Logikwerte alle "0", wird aufgrund des Sperrsignals Sp am Ausgang der NAND-Schaltung 222 die Treiberschaltung 248 gesperrt, so daß keiner der Triacs leitend geschaltet werden kann.

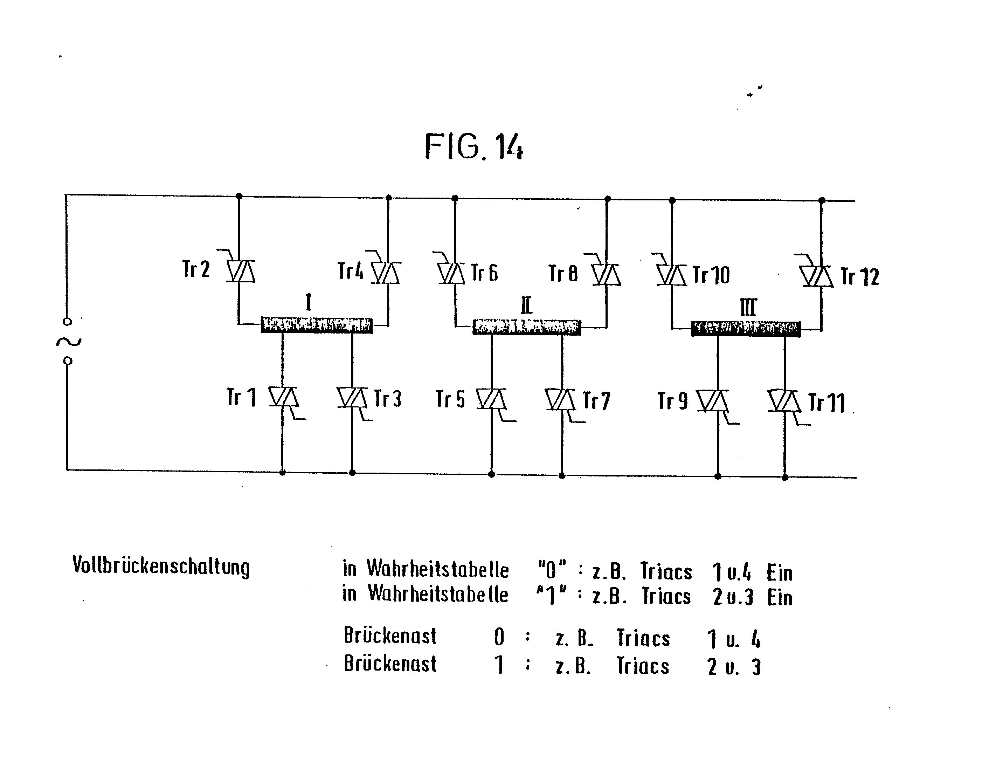

Fig. 14 zeigt eine Direktumrichter-Vollbrückenschaltung. Die Antriebsspulen I, II, III befinden sich je in einem Brückenast mit vier der Triacs $Tr_1$ bis $Tr_{12}$. Betrachtet man beispielsweise den Brückenzweig mit der Spule 1 und den Triacs $Tr_1$ bis $Tr_4$, so kann beispielsweise durch Leitend-Schalten der Triacs $Tr_1$ und $Tr_4$ Strom in einer

Richtung und durch Leitend-Schalten der Triacs $Tr_2$ und $Tr_3$ Strom in der anderen Richtung durch die Spule I geschickt werden. Die Wahrheitstabelle in Fig. 15 gilt für die Vollbrücken-Schaltung gleichermaßen wie für die Halbbrücken-Schaltung. Allerdings haben die Logikwerte "1" und "0" für die Triacs nun, solange ein Wagen im Abschnitt ist, nicht mehr die Bedeutung Strom-Einschalten bzw. Strom-Nicht-Einschalten, sondern die Bedeutung Einschalten des Triacpaares für die eine Stromrichtung bzw. Einschalten des Triacpaares für die andere Stromrichtung durch die zugehörige Spule. Für die Spule I in Fig. 15 bedeutet dies beispielsweise, daß im Fall des Logikwertes "1" das Triacpaar $Tr_2$ und $Tr_3$ und im Fall des Auftretens des Logikwertes "0" das Triacpaar $Tr_1$ und $Tr_4$ eingeschaltet wird.

Die in Fig. 14 unteren Triacs $Tr_1$, $Tr_3$, $Tr_5$, $Tr_7$, $Tr_9$ und $Tr_{11}$ sind an Anzapfungen der zugehörigen Spulen I, II bzw. III angeschlossen. Damit wird verhindert, daß bei einem durch Störungen ausgelösten Zünden eines falschen Triac-Paares, z.B. $Tr_1$ und $Tr_2$ ein Kurzschluß auftritt. Der zwischen einem solchen Triac-Paar liegende Spulenteil bildet in diesem Fall einen Schutz für die Triacs. Dies erfolgt mit dem Signal am Eingangsanschluß $E_{18}$.

Eine Geschwindigkeitsbegrenzung auf eine maximal zulässige Geschwindigkeit $v_{max}$ kann man dadurch erreichen, daß man die Schaltfrequenz, mit welcher die Triacs umgeschaltet werden können, das heißt, mit welcher die Logikwert-Muster von $T_I$, $T_{II}$, $T_{III}$ geändert werden können, begrenzt. Pro Schalttakt bleibt das Einschalt-Muster fest. Daher fährt der Wagen bei Übergeschwindigkeit infolge seiner Trägheit in ein gegenläufiges Einschalt-Muster, das einen aktiven Gegenschub zur Folge hat. Daher wird der Wagen bis auf die zulässige Maximalgeschwindigkeit abgebremst.

Die auf den Wagen wirkende Vorschubkraft kann man beispielsweise durch eine Phasenanschnittschaltung steuern. Mit dieser läßt sich die effektive Stromstärke steuern und damit die Antriebskraft, die zur Stromstärke proportional ist.

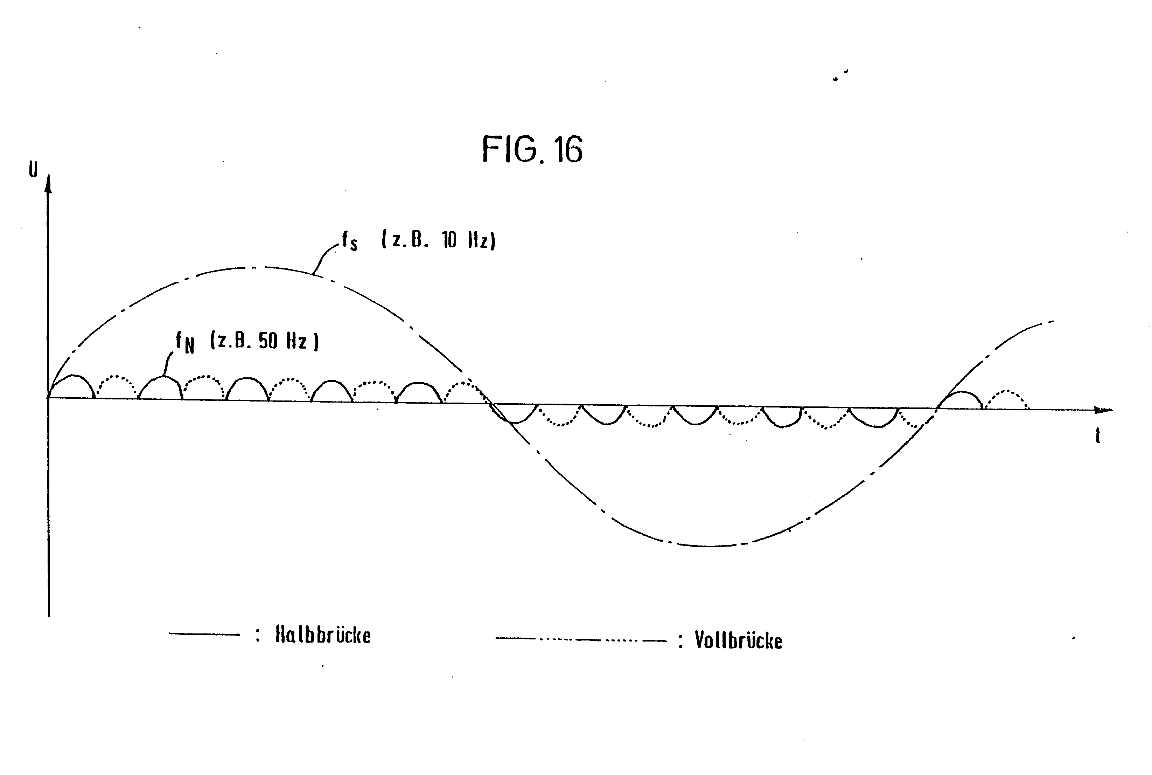

Die Minimalgeschwindigkeit, die der Wagen einnehmen kann, hängt nicht von der Festfrequenz der zur Spulenerregung verwendeten Wechselspannung ab. Da der Wagen sich mit Hilfe der Sensoren bzw. Hallsonden den für seine jeweilige Position richtigen Strom selbst einschaltet, ergibt sich für niedrige Geschwindigkeiten unterhalb des einer Netzfrequenz von beispielsweise 5 Hz entsprechenden Wertes eine periodisch umgepolte gleichgerichtete Netzspannung, wobei die Umpolungsfrequenz unterhalb der Netzfrequenz liegt. Bei niedrigen Geschwindigkeiten wirkt der erfindungsgemäße Antrieb oder Generator also als Frequenzuntersetzer. Dies ist in Fig. 16 schematisch dargestellt. Nimmt man an, daß die Netzfrequenz $f_N$ beispielsweise 50 Hz ist und daß es jeweils nach fünf Perioden der Netzwechselspannung zu einer Umpolung der gleichgerichteten Netzspannung kommt, ergibt sich für die Frequenz des durch die Spulen fließenden Stroms eine Frequenz $f_S$ von 10 Hz. Bei Verwendung einer Direktumsetzer-Halbbrückenschaltung in der Schalteinrichtung gelten die durchgezogenen Halbwellenlinien, während bei Verwendung einer Direktumsetzer-Vollbrückenschaltung die durchgezogenen und die gestrichelten Halbwellen gelten.

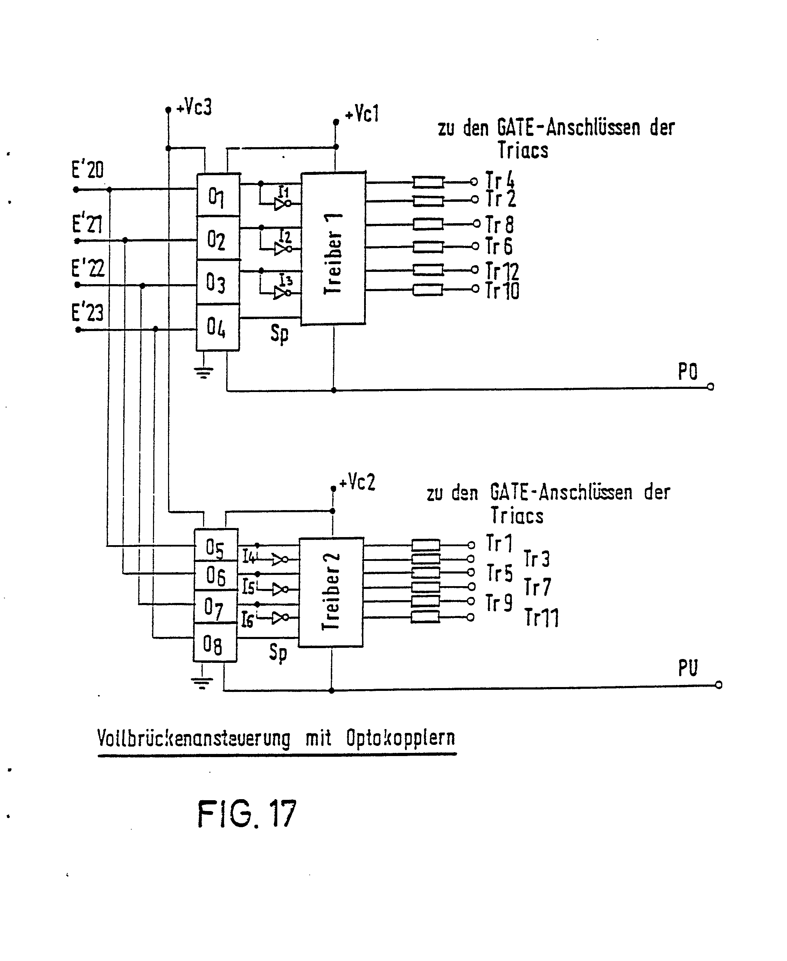

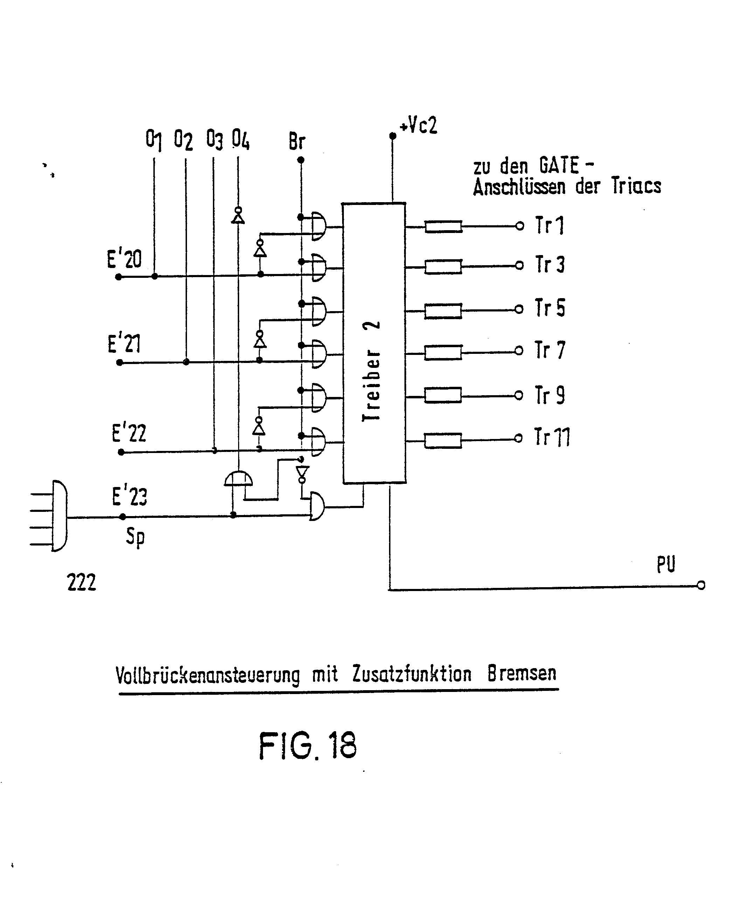

Anhand der Figuren 17 und 18 werden nun zwei Ausführungsformen für eine Ansteuerung einer Direktumsetzer-Vollbrückenschaltung gemäß Fig. 14 erläutert.

Bei der in Fig. 17 dargestellten Ausführungsform werden Eingangsanschlüssen $E'_{20}$, $E'_{21}$ und $E'_{22}$ die nach der Zwischenspeicherung in dem Flipflop 224 in Fig. 11 verfügbaren Sondensignale C, B bzw. A von den Ausgangsanschlüssen $A_{13}$, $A_{14}$ bzw. $A_{15}$ in Fig. 11 zugeführt. Einem Eingangsanschluß $E'_{23}$ in Fig. 17 wird das Sperrsignal Sp vom Ausgangsanschluß $A_{11}$ in Fig. 11 zugeführt. Die Eingangsanschlüsse $E'_{20}$ bis $E'_{23}$ sind in der in Fig. 17 dargestellten Weise sowohl mit einer ersten Optokopplergruppe $O_1$ bis $O_4$ als auch mit einer zweiten Optokopplergruppe $O_5$ bis $O_8$ verbunden. Den Optokopplern $O_1$ bis $O_3$ der ersten Optokopplergruppe sowie den Optokopplern $O_5$ bis $O_7$ der zweiten Optokopplergruppe werden die Sondeninformationen C, B, A (Fig. 11) zugeführt. Die Optokoppler $O_4$ und $O_8$ der ersten und der zweiten Optokopplergruppe erhalten das Sperrsignal Sp.

Der ersten Optokopplergruppe $O_1$ bis $O_4$ ist ein erster Treiber 1 zugeordnet und der zweiten Optokopplergruppe $O_5$ bis $O_8$ ist ein zweiter Treiber 2 zugeordnet. Beim Anliegen eines Sperrsignals Sp am Eingangsanschluß $E'_{23}$ werden die beiden Treiber 1 und 2 von den Ausgangssignalen der Optokoppler $O_4$ bzw. $O_8$ gesperrt.

Der Ausgang eines Optokopplers ist mit zwei Eingängen des zugehörigen Treibers verbunden. Einer dieser beiden Treibereingänge ist mit dem Ausgang des zugehörigen Optokopplers direkt verbunden, während der andere dieser beiden Treibereingänge mit dem zugehörigen Optokoppler über einen der Inverter $I_1$ bis $I_6$ verbunden ist.

Wie im Zusammenhang mit der Wahrheitstabelle in Fig. 15 bereits angedeutet worden ist, wird, solange sich ein Wagen im eigenen Abschnitt befindet, in Abhängigkeit davon, ob der zugehörige der Logikwerte $T_I$, $T_{II}$, $T_{III}$ den Logikzustand "1" oder "0" aufweist, für die zugehörige Antriebsspule entweder das eine oder das andere Triacpaar eingeschaltet. Für die Antriebsspule I in Fig. 14 bedeutet dies, daß im einen Logikzustand das Triacpaar $Tr_1$ und $Tr_4$ und im anderen Logikzustand das Triacpaar $Tr_2$ und $Tr_3$ eingeschaltet ist. Je nach Art der den Eingangsanschlüssen $E'_{20}$ bis $E'_{23}$ jeweils zugeführten Information über die Sonden a, b, c werden daher an den Ausgängen der Treiber 1 und 2 diejenigen Triacs eingeschaltet, die an Treiberausgänge angeschlossen sind, die nicht invertierten Treibereingängen zugeordnet sind, oder es werden jene Triacs eingeschaltet, die an Treiberausgänge angeschlossen sind, die invertierten Treibereingängen zugeordnet sind.

Die mit den Optokopplern und den Treibern verbundenen Leitungen PO ("Phase oben") und PU ("Phase unten") sind an die entsprechend bezeichneten Leitungen in Fig. 14 angeschlossen.

Fig. 18 zeigt eine Schaltung zur Vollbrückenansteuerung, wobei eine Zusatzfunktion "Bremsen" vorhanden ist. Zum Zweck des Bremsens wird dabei das je untere Triacpaar einer Antriebsspule eingeschaltet, so daß diese Antriebsspule kurzgeschlossen ist. Die solchermaßen kurzgeschlossene Antriebsspule wirkt dann auf einen über sie hinwegfahrenden Wagen als Induktionsbremse.

Bei einer Schaltung zur Vollbrückenaussteuerung mit Bremsfunktion gemäß Fig. 18 bleibt der in Fig.17 obere Schaltungsteil mit den Eingangsanschlüssen $E'_{20}$ bis $E'_{23}$, der oberen Optokopplergruppe $O_1$ bis $O_4$, der oberen Invertergruppe $I_1$ bis $I_3$ und dem oberen Treiber 1 unverändert erhalten. Nur der in Fig. 17 untere Schaltungsteil wird in der in Fig. 18 dargestellten Weise abgeändert. Die von den Eingangsanschlüssen $E'_{20}$, bis $E'_{22}$ zugeführten Sondeninformationssignale gelangen nicht mehr direkt auf die Eingänge des Treibers 2, sondern über ODER-Schaltungen $OR_1$ bis $OR_6$. Die von den Eingangsanschlüssen $E'_{20}$ bis $E'_{22}$ kommenden Sondeninformationssignale werden direkt oder nach Inversion durch die Inverter $I_4$ bis $I_6$ je auf einen Eingang der zugehörigen der ODER-Schaltungen $OR_1$ bis $OR_6$ gegeben. Die je anderen Eingänge dieser ODER-Schaltungen $OR_1$ bis $OR_6$ sind mit einem Eingangsanschluß $E_{40}$ verbunden, dem ein Bremssignal Br zugeführt werden kann. Beim Vorhandensein des Bremssignals Br werden die in Fig. 14 unteren Thyristorpaare $Tr_1$ und $Tr_3$, $Tr_5$ und $Tr_7$ sowie $Tr_9$ und $Tr_{11}$ leitend geschaltet, so daß alle drei Antriebsspulen I, II und III kurzgeschlossen sind und als Induktionsbremsen wirken.

Während dieses Bremsens, dem die Funktion einer Notbremse zugeordnet werden kann, sollen die in Fig. 14 oberen Triacpaare $Tr_2$ und $Tr_4$, $Tr_6$ und $Tr_8$ sowie $Tr_{10}$ und $Tr_{12}$ sperren. Zu diesem Zweck wird das Bremssignal Br über eine ODER-Schaltung $OR_7$ und einen Inverter $I_7$ auf den unteren Optokoppler $O_4$ der in Fig. 17 oberen Optokopplergruppe gegeben, um den oberen Treiber 1 zu sperren, und damit die in Fig. 14 oberen Triacs.

Um beabsichtigter Bremsung ein Leitendschalten der in Fig. 14 unteren Triacpaare sicherzustellen, muß verhindert werden, daß der Treiber 2 durch ein Sperrsignal Sp vom Ausgangsanschluß $A_{11}$ in Fig. 11 gesperrt wird. Zu diesem Zweck wird das Bremssignal Br über einen Inverter $I_0$ auf einen Eingang einer UND-Schaltung $U_1$ gegeben, deren anderem Eingang das Sperrsignal Sp zugeführt werden kann. Aufgrund dieser UND-Schaltung $U_1$ kann das Sperrsignal Sp nur wirksam werden, solange kein Bremssignal Br vorhanden ist.

Falls bei der in Fig. 18 dargestellten Modifikation ebenfalls eine Potentialtrennung zwischen Logikschaltung und Triac-Leistungsversorgung erwünscht ist, kann diese wieder mit an geeigneter Stelle angeordneten Optokopplern erreicht werden.

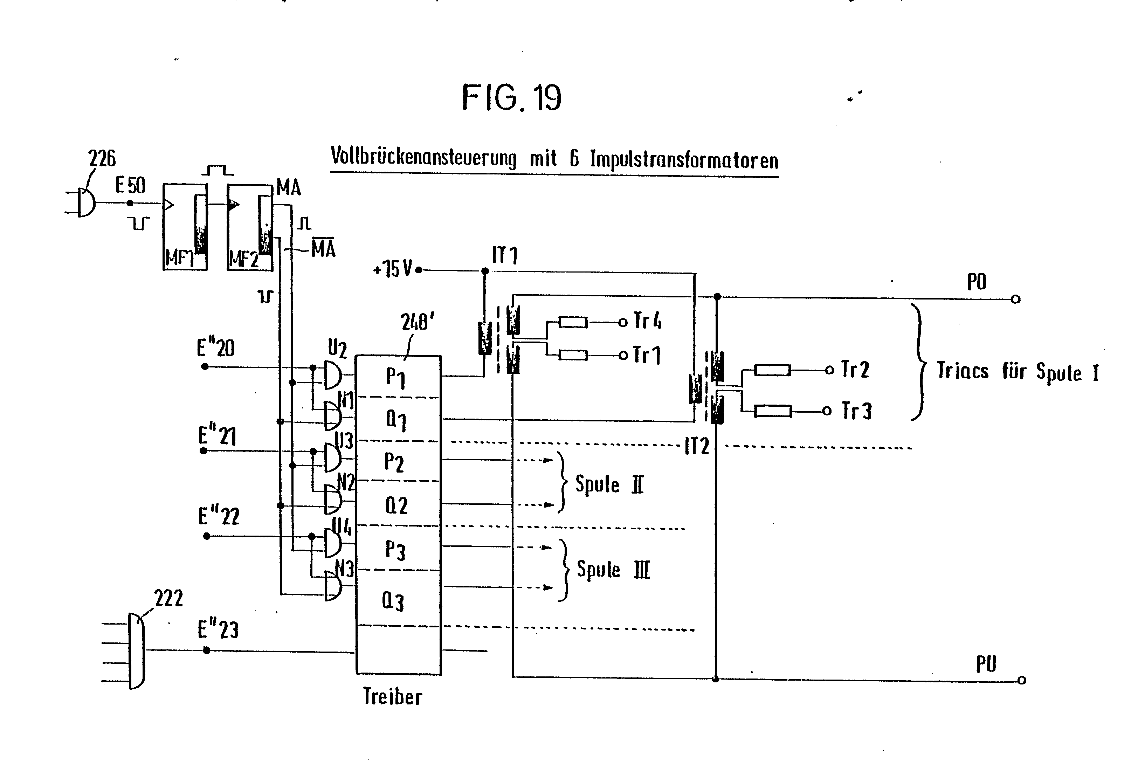

Eine weitere Möglichkeit zur Ansteuerung einer Vollbrückenschaltung zeigt Fig. 19. Dabei geschieht die Ansteuerung der Triac-Gate-Elektroden mittels Impulstransformatoren $IT_1$, $IT_2$, ... .

Eingangsanschlüssen $E''_{20}$, $E''_{21}$ und $E''_{22}$ werden die an den Ausgangsanschlüssen $A_{13}$, $A_{14}$ bzw. $A_{15}$ (Fig. 11) verfügbaren Sondeninformationssignale C, B bzw. A zugeführt. Von den Eingangsanschlüssen $E''_{20}$, $E''_{21}$ und $E''_{22}$ gelangen diese Sondeninformationssignale sowohl auf einen Eingangsanschluß E einer UND-Schaltung $U_2$, $U_3$ bzw. $U_4$ als auch auf einen Eingangsanschluß je einer NOR-Schaltung $N_1$, $N_2$ bzw. $N_3$. Die Ausgänge der UND-Schaltung $U_2$ bis $U_4$ und der NOR-Schaltungen $N_1$ bis $N_3$ sind je mit einem anderen Eingang einer Treiberschaltung 248' verbunden. In Fig. 19 sind die einzelnen Schaltverstärkerstufen der Treiberschaltung 248' durch gestrichelt voneinander getrennt dargestellte Treiberteile $P_1$, $Q_1$, $P_2$, $Q_2$, $P_3$ und $Q_3$ dargestellt. Dabei sind die Treiberteile $P_1$, $P_2$ und $P_3$ eingangsseitig mit den Ausgängen der UND-Schaltungen $U_2$, $U_3$ bzw. $U_4$ verbunden. Die Ausgänge der NOR-Schaltungen $N_1$, $N_2$, $N_3$ dagegen sind mit den Eingängen der Treiberteile $Q_1$, $Q_2$ bzw. $Q_3$ verbunden. Jeder der Treiberteile ist ausgangsseitig mit der Primärspule eines Impulstransformators $IT_1$, $IT_2$ ... $IT_6$ verbunden. Sekundärseitig weisen diese Impulstransformatoren zwei Spulen auf. Eine der Sekundärspulen eines jeden Impulstransformators ist mit der Leitung PO (Fig. 14) und dem Gateanschluß eines Triacs verbunden, der zu einem Paar gemeinsam zu zündender Triacs gehört, und die andere Sekundärspule eines jeden Impulstransformators ist einen Endes mit der Leitung PU (Fig. 14) und anderen Endes mit dem Gate-Anschluß des anderen zu dem gemeinsam zu zündenden Triacpaar gehörenden Triac verbunden. In Fig. 19 sind der Einfachheit halber nur die an die Treiber-

teile $P_1$ und $Q_1$ angeschlossenen Impulstransformatoren $IT_1$ und $IT_2$ für die Antriebsspule I dargestellt. Für die Treiberteile $P_2$, $Q_2$ und $P_3$, $Q_3$ werden identische Impulstransformatorschaltungen verwendet. An den Ausgang des Treiberteils $P_2$ ist dabei ein Impulstransformator $IT_3$ angeschlossen, der sekundärseitig mit den Gate-Anschlüssen der Triacs $Tr_8$ und $Tr_5$ angeschlossen ist, während über den an den Treiberteil $Q_2$ angeschlossenen Impulstransformator $IT_4$ die Triacs $Tr_6$ und $Tr_7$ angesteuert werden. Entsprechendes gilt hinsichtlich der Treiberteile $P_3$ und $Q_3$ für die Ansteuerung der Triacs $Tr_9$ bis $Tr_{11}$ für die Antriebsspule III.

Die in Fig. 19 dargestellte Ausführungsform einer Ansteuerung für die Vollbrückenschaltung in Fig. 14 ist mit zwei monostabilen Kippschaltungen $MF_1$ und $MF_2$, im folgenden kurz Monoflop genannt, ausgerüstet. Über einen Eingangsanschluß $E_{50}$, der an den Ausgangsanschluß $A_{16}$ in Fig. 11 angeschlossen ist, erhält das Monoflop $MF_1$ die am Ausgang der EXKLUSIV-ODER-Schaltung 226 verfügbaren Nulldurchgangsanzeigeimpulse NAP als Triggerimpulse. Die Zeitkonstante des Monoflop $MF_1$ ist einstellbar, d.h. die zeitliche Länge der von einem Nulldurchgangsanzeigeimpuls NAP ausgelösten Ausgangsimpulse von $MF_1$ ist einstellbar. Damit hat $MF_1$ die Funktion eines Phasenanschnittsmonoflop, mit dessen Hilfe der maximale Wagenvorschub eingestellt werden kann, der proportional zum maximal möglichen Strom durch die Antriebsspulen ist.

Der Ausgangsimpuls des einstellbaren Monoflops $MF_1$ triggert mit seiner Rückflanke das zweite Monoflop $MF_2$, an dessen Ausgängen MA und $\overline{MA}$ Zündimpulse für die Triacs der Vollbrückenschaltung abgeben. Die Impulse am Ausgang $\overline{MA}$ sind gegenüber den Impulsen am Ausgang MA invertiert.

Ja nachdem, ob an einem der Eingangsanschlüsse $E''_{20}$, $E''_{21}$ und $E''_{22}$ als Sondeninformationssignal der Logikwert "1" oder der Logikwert "0" anliegt, wird entweder der Impuls vom Ausgang MA des zweiten Monoflops $MF_2$ über die zugehörige der UND-Schaltungen $U_2$, $U_3$ bzw. $U_4$ zum entsprechenden Treiberteil $P_1$, $P_2$ bzw. $P_3$ durchgelassen oder es gelangt der invertierte Ausgangsimpuls vom Ausgang $\overline{MA}$ des zweiten Monoflops $MF_2$ über die zugehörige der NOR-Schaltungen $N_1$, $N_2$ bzw. $N_3$ zum entsprechenden Treiberteil $Q_1$, $Q_2$ bzw. $Q_3$. Je nachdem, ob beispielsweise am Eingangsanschluß $E''_{20}$ ein Logikwert "1" oder "0" anliegt, wird somit entweder das Triacpaar $Tr_1$ und $Tr_4$ oder das Triacpaar $Tr_2$ und $Tr_3$ gezündet.

Das einstellbare Phasenanschnitt-Monoflop $MF_1$ wird jeweils vom Nulldurchgangsanzeigesignal NAP getriggert, d.h. jeweils nach einer vorbestimmten kurzen Zeitdauer nach dem Nulldurchgang der zur Spulenerregung verwendeten Netzwechselspannung. Ist im Phasenanschnitt-Monoflop $MF_1$ eine sehr kleine Zeitkonstante eingestellt, ist die Rückflanke des von $MF_1$ abgegebenen Impulses, mit welcher das zweite Monoflop $MF_2$ gezündet wird, gegenüber der Rückflanke des Nulldurchgangsanzeigeimpulses NAP nur geringfügig verzögert, so daß die dem Sondeninformationsmuster entsprechenden Triacs nur kurze Zeit nach Beginn der jeweiligen Halbwelle der Netzwechselspannung gezündet werden können. Wird dagegen im Phasenanschnitt-Monoflop $MF_1$ eine große Zeitkonstante eingestellt, erscheint die das zweite Monoflop $MF_2$ triggernde Rückflanke des Ausgangssignals von $MF_1$ eine große Zeitkonstante eingestellt, erscheint die das zweite Monoflop $MF_2$ triggernde Rückflanke des Ausgangssignals von $MF_1$ mit einer relativ großen Verzögerung gegenüber der Rückflanke des Nulldurchgangsanzeigeimpulses NAP, so daß die entsprechend dem Sondeninformationsmuster zu zündenden Triacs erst mit relativ großer Zeitverzögerung nach Beginn der jeweiligen Halbwelle der Netzwechselspannung gezündet werden. Im letzteren Fall fließt also ein wesentlich kleinerer effektiver Strom durch die Antriebsspulen als im ersteren Fall. Durch diese Phasenanschnittsteuerung kann man somit die auf den Wagen ausgeübte Vorschubkraft auf einen gewünschten Maximalwert $F_{max}$ begrenzen.

Die Einstellung das Phasenanschnitt-Monoflop $MF_1$ kann für jeden Abschnitt durch Einzeleinstellung von Hand vorgenommen werden, beispielsweise nachdem experimentell ermittelt worden ist, wie groß der maximale Vorschub in einem bestimmten Abschnitt nur sein darf. Beispielsweise wird man das Phasenanschnitt-Monoflop $MF_1$ von Abschnitten, die eine Steigung oder ein Gefälle aufweisen, für eine größere bzw. kleinere maximale Vorschubkraft als für ebene Abschnitte einstellen. Vorzugsweise wird man allerdings die Einstellung der Phasenanschnitt-Monoflops $MF_1$ der einzelnen Abschnitte durch Steuerbefehle von der Zentrale vornehmen.

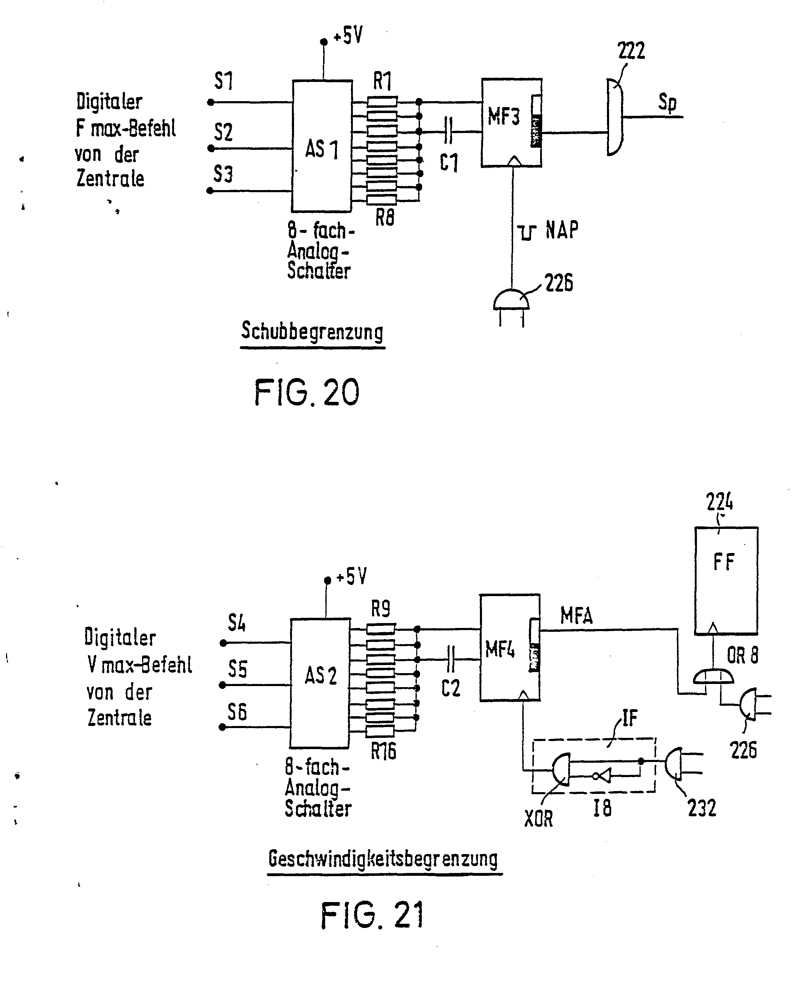

Eine andere Ausführungsform zum Erreichen einer gewünschten Schubbegrenzung in den einzelnen Abschnitten ist in Fig. 20 dargestellt. Diese Ausführungsform ist sowohl für eine Direktumsetzer-Halbbrückenschaltung (Fig.13 ) als auch für eine Direktumsetzer-Vollbrückenschaltung (Fig.14 ) verwendbar.

Bei dieser Ausführungsform ist ein verstellbares Phasenanschnitt-Monoflop $MF_3$ einem Eingang der NAND-Schaltung 222 in Fig. 11 vorgeschaltet. Das Phasenanschnitt-Monoflop $MF_3$ wird wieder vom Nulldurchgangsanzeigeimpuls NAP getriggert, der am Ausgang der EXKLUSIV-ODER-Schaltung 226 zur Verfügung steht. Der NAND-Schaltung 222 wird nun (in Fig. 11 in ihrem dritten Eingang von oben) nicht mehr der Nulldurchgangsanzeigeimpuls NAP direkt zugeführt, sondern ein entsprechend der Zeitkonstante des Phasenanschnitt-Monoflop $MF_3$ verlängerter Impuls. Das heißt, am Ausgang der NAND-Schaltung 222 tritt das Sperrsignal Sp für die Triac-Treiberschaltung (248 in Fig. 12; Treiber 1 und Treiber 2 in den Fig. 17 und 18; bzw. 248' in Fig. 19) nicht nur bis zum Ende des Nulldurchgangsanzeigeimpulses NAP sondern bis zum Ende des vom Ausgang des Phasenanschnitt-Monoflop $MF_3$ abgegebenen Impulses auf. Je größer die Zeitkonstante von $MF_3$ ist, umso später im Verlauf der jeweiligen Netzwechselspannungshalbwelle können die Triacs gezündet werden, um so geringer ist der durch die Antriebsspulen effektiv fließende Strom und umso geringer ist somit die auf den Wagen wirkende Vorschubkraft.

Die Zeitkonstante des einstellbaren Phasenanschnitt-Monoflops $MF_3$ kann mit Hilfe eines von der Zentrale aus steuerbaren 8-fach-Analogschalters $AS_1$ sind acht Widerstände $R_1$ bis $R_8$ angeschlossen. Je nach Schaltstellung von $AS_1$ sind unterschiedliche Kombinationen dieser Widerstände $R_1$ bis $R_8$ mit einem Kondensator $C_1$ zusammengeschaltet, so daß sich je nach Schaltstellung von $AS_1$ unterschiedliche Zeitkonstanten ergeben. Diese Zeitkonstanten sind für die Dauer des vom Phasenanschnitt-Monoflop $MF_3$ nach dessen Triggerung jeweils abgegebenen Impulses bestimmend. Die Schaltstellung des Analogschalters $AS_1$ kann mit Hilfe von Steuersignalen eingestellt werden, die Eingangsanschlüssen $S_1$, $S_2$ und $S_3$ des Analogschalters $AS_1$ kann mit Hilfe von Steuersignalen eingestellt werden, die Eingangsanschlüssen $S_1$, $S_2$ und $S_3$ des Analogschalters $AS_1$ von der Zentrale als Befehle für den maximalen Vorschub $F_{max}$zugeführt werden.

Durch Steuerbefehle von der Zentrale läßt sich also im jeweiligen Abschnitt die Zeitdauer verändern, für welche nach jedem Nulldurchgang der Netzwechselspannung der Triac-Treiber aufgrund des Sperrsignals Sp am Ausgang der NAND-Schaltung 222 gesperrt bleibt.

Fig. 21 zeigt eine Ausführungsform für eine Schaltung zur Geschwindigkeitsbegrenzung auf eine Maximalgeschwindigkeit $v_{max}$. Diese Schaltung weist genau wie die Schubbegrenzungsschaltung in Fig. 20 einen von der Zentrale digital ansteuerbaren 8-fach-Analogschalter $AS_2$ mit Eingangsanschlüssen $S_4$, $S_5$ und $S_6$, mit dessen Hilfe eine Zeitkonstantenschaltung mit Widerständen $R_9$ bis $R_{16}$ und einem Kondensator $C_2$ für ein einstellbares Monoflop $MF_4$ von der Zentrale aus einstellbar ist. Bei diesem einstellbaren Monoflop $MF_4$ handelt es sich um ein retriggerbares Monoflop, d.h., um ein Monoflop, das auch im gesetzten Zustand durch einen neuen Triggerimpuls derart beeinflußbar ist, daß sich der Ausgangsimpuls dieses Monoflops $MF_4$ vom Zeitpunkt der erneuten Triggerung während des gesetzten Zustandes um die eingestellte Zeitkonstante dieses Monoflops verlängert. Der Ausgang MFA des retriggerbaren Monoflops $MF_4$ ist mit einem Eingang einer ODER-Schaltung $OR_3$ verbunden, deren Ausgang mit dem Taktanschluß T des getakteten Flipflops 224 (Fig. 11) verbunden ist. Der andere Eingang der ODER-Schaltung $OR_3$ ist mit dem Ausgang der EXKLUSIV-ODER-Schaltung 226 (Fig. 11) verbunden. Der Triggereingang des retriggerbaren Monoflops $MF_4$ ist mit dem Ausgang einer Impulsformungsschaltung IF verbunden, die ihrerseits an den Ausgang der EXKLUSIV-ODER-Schaltung 232 (Fig.11) verbunden ist. Die Impulsumformungsschaltung IF enthält eine EXKLUSIV-ODER-Schaltung XOR , deren einem Eingang das Geschwindigkeitsinformationssignal vom Ausgang der EXKLUSIV-ODER-Schaltung 232 direkt und deren anderem Eingang dieses Geschwindigkeitsinformationssignal über einen Inverter $I_8$ zugeführt wird.

Das Geschwindigkeitsinformationssignal wird aus den Sondensignalen gebildet und besteht aus einer periodischen Impulsfolge, deren Folgefrequenz bzw. Impulslänge von der Geschwindigkeit des den betrachteten Abschnitt durchlaufenden Wagens abhängt.

In der Impulsformungsschaltung IF wirkt der Inverter $I_8$ als ein Verzögerungselement für die Geschwindigkeitsinformationsimpulse. Dabei wird die einem Inverter von Natur aus immanente Verzögerungszeit zwischen dem Ansprechen des Ausgangs auf einen Signalwechsel am Eingang ausgenutzt. Da eine EXKLUSIV-ODER-Schaltung immer dann ein bestimmtes Ausgangssignal, beispielsweise den Logikwert "1" abgibt, wenn die seinen Eingängen zugeführten Logikwerte verschieden sind, gibt die Impulsformungsschaltung IF an ihrem Ausgang bei jedem Logikwertwechsel der Geschwindigkeitsinformationsimpulsfolge einen kurzen Ausgangsimpuls ab, dessen Länge von der durch den Inverter $I_8$ verursachten Verzögerung entspricht. Diese kurzen Ausgangsimpulse werden als Triggerimpulse auf den Triggereingang des retriggerbaren Monoflops $MF_4$ gegeben. Jeder dieser Triggerimpulse löst am Ausgang MFA des retriggerbaren Monoflops $MF_4$ einen Ausgangsimpuls einer von der Einstellung der Zeitkonstantenschaltung abhängigen Impulsdauer aus oder verlängert einen am Ausgang MFA gerade vorhandenen Ausgangsimpuls von der erneuten Triggerung ab um die der eingestellten Zeitkonstante entsprechende Impulsdauer.

Wäre das retriggerbare Monoflop $MF_4$ nicht vorhanden, könnte das Flipflop 224 jeweils bei der Rückflanke eines jeden Nulldurchgangsanzeigeimpulses NAP in den dem jeweiligen Sondeninformationsmuster entsprechenden Zustand geschaltet werden. Ist der über die EXKLUSIV-ODER-Schaltung OR₈ zugeführte Ausgangsimpuls des retriggerbaren Monoflop vor der Rückflanke des Nulldurchgangsanzeigeimpulses NAP beendet, wird das Flipflop 224 von dieser Rückflanke des Nulldurchgangsanzeigeimpulses NAP in den dem jeweiligen Sondeninformationsmuster entsprechenden Zustand geschaltet. Hat der Wagen jedoch die zulässige Maximalgeschwindigkeit $v_{max}$ überschritten, ist der Impuls am Ausgang MFA des retriggerbaren Monoflops MF₄ beim Auftreten der Rückflanke des Nulldurchgangsanzeigeimpulses NAP noch nicht beendet, wodurch das Umschalten des Flipflops 224 in den dem gerade vorhandenen Sondeninformationsmuster entsprechenden Zustand noch verhindert wird. Dies führt dazu, daß ein Spulenerregungsmuster festgehalten wird, das dem nun vorliegenden Sondeninformationsmuster, d.h. der momentan vorhandenen Wagenposition, nicht mehr entspricht. Als Folge davon trifft der Wagen zunächst auf ein Spulenerregungsmuster, das zusammen mit den über den Spulen gerade befindlichen Dauermagneten am Wagen zu einer Bremswirkung für den Wagen führt.

Erst wenn aufgrund der Abbremsung des Wagens wieder ein Zustand erreicht ist, in welchem die vom retriggerbaren Monoflop MF₄ abgegebenen Impulse wieder so früh beendet sind, daß sie das Schalten des Flipflops 224 mit der Rückflanke des Nulldurchgangsanzeigeimpulses NAP nicht mehr verhindern, kann der Wagen wieder eine ungebremste Bewegung durchführen.

Durch die Geschwindigkeitsbegrenzungsschaltung gemäß Fig. 21 wird die Geschwindigkeit der Fortschaltung des Sondenmusters zu den Triacs begrenzt und eine Bremswirkung auf den Wagen ausgeübt, sobald sich das Sondenmuster der Wagengeschwindigkeit entsprechend schneller ändert als dies bei der Maximalgeschwindigkeit der Fall wäre.

## Ansprüche

1. Elektrischer linearer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (2) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt, wobei der Stator (2) in mehrere Statorabschnitte (n, n + 1, ...) aufgeteilt ist, denen je eine Schalteinrichtung (40) zugeordnet ist, zur Verwendung beim An trieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen, dadurch gekennzeichnet, daß zur Auffahrverhinderung eine Steuerung zur Begrenzung der Geschwindigkeit oder eine Abstandssteuerung über miteinander kommunizierende Statorabschnitte vorgesehen ist.

2. Antrieb oder Generator nach Anspruch 1, dadurch gekennzeichnet, daß eine elektronische Strombegrenzungseinrichtung vorgesehen ist, die den den Stromleitern zugeführten bzw. entnommenen Strom nach oben begrenzt und/oder abschaltet.

3. Antrieb oder Generator nach einem der vorhergehenden Ansprüche, dadurch gekennzeichnet, daß eine elektronische Geschwindigkeitsbegrenzungsschaltung vorgesehen ist.

4. Antrieb oder Generator nach einem der Ansprüche 1 bis 3, dadurch gekennzeichnet, daß die Schalteinrichtung (40) eines jeden Abschnittes eine Steuerschaltung mit einer Eingabe/Ausgabe-Schaltung (200) aufweist, über welche die Steuerschaltung an eine Busleitung (202) anschaltbar ist, über welche die Eingabe/Ausgabe-Schaltungen der einzelnen Abschnitte mit einer Zentrale (204) verbunden sind.

5. Antrieb oder Generator nach Anspruch 4, dadurch gekennzeichnet, daß die Eingabe/Ausgabe-Schaltungen (200) je einen vorzugsweise in Tri-State-Technik aufgebauten Multischalter (214) mit einem Sperreingang (S) und mit einem Freigabeeingang (F) aufweisen.

6. Antrieb oder Generator nach Anspruch 4 oder 5, dadurch gekennzeichnet, daß jeder Abschnitt einen Läuferdetektor (a, b, c, d, 220) aufweist, mit dem das Vorhandensein eines Läufers im jeweiligen Abschnitt gemeldet werden kann.

7. Antrieb oder Generator nach Anspruch 6, dadurch gekennzeichnet, daß der Ausgang des Läuferdetektors (a, b, c, d, 220) eines jeden Abschnittes (... n-1, n, n + 1 ...) mit dem Freigabeeingang (F) des Multischalters (214) dieses Abschnittes (z.B. n) und mit dem Sperreingang (S) des Multischalters (214) des in der Abschnitt-Numerierung niedrigeren Abschnittes (z.B. n-1) verbunden ist.

8. Antrieb oder Generator nach Anspruch 4 bis 7 , dadurch gekennzeichnet, daß zur Geschwindigkeitsbegrenzung eine hinsichtlich ihrer Zeitkonstanten einstellbare, retriggerbare Kippschaltung (MF₄) vorgesehen ist, die von einer Triggerimpulsfolge, deren Impulsfolgefrequenz zur Läufergeschwindigkeit proportional ist, triggerbar ist und beim Überschreiten der maximal zugelassenen Geschwindigkeit ($v_{max}$) das Umschalten des getakteten Flipflop (224) aufgrund der Zeitlänge der von ihr abgegebenen Impulse (bei MFA) für eine solche Zeitdauer verzögert oder verhindert, daß der Läufer mindestens zeitweise auf ein ihn abbremsendes Spulenerregungsmuster trifft, bis er auf die Maximalgeschwindigkeit abgebremst ist.

# FIG. 1

# FIG. 2

FIG. 3

FIG.4

# FIG. 5

Polteilung

Wagen
- Dauermagnete 30
- Steuermagnete 34 (verschiebbar ±½τ)

Strecke
- Antriebsspulen 10
- Sonden 38
- Leistungsschalter

$T_I$  $T_{II}$  $T_{III}$

I  II  III | I' II' III' | I  II  III | I' II' III' | I  II  III | I' II' III' |

a  b  c | d                                    a  b  c | d

Sonden – Periodizitätsintervall

0 278 532

# FIG.6

Busleitung

Zentrale

Abschnitt | n-2 | n-1 | n | n+1 | n+2 | n+3 — — — —

Belegt / Frei — Informationsaustausch
zwischen benachbarten Abschnitten

0 278 532

# FIG. 7

Sonden
a, b, c, d — 206

Eingabe /
Ausgabe -
Schaltung — 200

Logik-
Schaltung — 208

Schaltung für
Triac-Steuerung
u.Phasenlage-
Bestimmung — 210

Leistungs -
Schalter
( Triacs ) — 212

von der
Energiequelle

z.Abschnitt
n - 1

zum Abschnitt
n + 1

zur
Busleitung

zu den
Antriebsspulen

0 278 532

# FIG. 8 a

204

208

200

FIG. 8 b

# FIG. 8 b

212

210

FIG. 8 a

# FIG. 9

von den Sonden →

zur Zentrale →

Multischalter — 274

E1 — a — A1 — a
E2 — b — A2 — b
E3 — c — A3 — c
x — E4 — A4 — x
y — E5 — A5 — y
z — E6 — A6 — z

F — S

276

E7 — Signal "Wagen im eigen. Abschnitt"

278

E8 — Signal "Wagen da" v.höheren Abschnitt

A7 — Signal "Wagen da" z.niedrigen Abschnitt

V max.

F max.

+ 5 V

•——— = Eingangsanschlüsse

o——— = Ausgangsanschlüsse

# FIG. 10

NAP = Nulldurchgangsanzeigeimpuls

# FIG. 11

# FIG. 12

# FIG. 13

•  Leistungsstecker

▢  Signalstecker

# FIG. 14

Vollbrückenschaltung

in Wahrheitstabelle    "0" : z.B. Triacs   1 u.4 Ein
in Wahrheitstabelle    "1" : z.B. Triacs   2 u.3 Ein

Brückenast    0 :   z. B.   Triacs   1 u. 4
Brückenast    1 :   z. B.   Triacs   2 u. 3

0 278 532

# FIG. 15

| a | b | c | d | Ph | $T_I$ | $T_{II}$ | $T_{III}$ | |
|---|---|---|---|----|-------|----------|-----------|---|
| 1 | 1 | 1 | 0 | 1 | 1 | 1 | 1 | |
| 1 | 1 | 1 | 0 | 0 | 0 | 0 | 0 | |
| 0 | 1 | 1 | 1 | 1 | 0 | 1 | 1 | |
| 0 | 1 | 1 | 1 | 0 | 1 | 0 | 0 | |
| 0 | 0 | 1 | 1 | 1 | 0 | 0 | 1 | Wagen da |
| 0 | 0 | 1 | 1 | 0 | 1 | 1 | 0 | |
| 0 | 0 | 0 | 1 | 1 | 0 | 0 | 0 | |
| 0 | 0 | 0 | 1 | 0 | 1 | 1 | 1 | |
| 1 | 0 | 0 | 0 | 1 | 1 | 0 | 0 | |
| 1 | 0 | 0 | 0 | 0 | 0 | 1 | 1 | |
| 1 | 1 | 0 | 0 | 1 | 1 | 1 | 0 | |
| 1 | 1 | 0 | 0 | 0 | 0 | 0 | 1 | |
| 0 | 0 | 0 | 0 | 1 | 0 | 0 | 0 | Wagen nicht da |
| 0 | 0 | 0 | 0 | 0 | 0 | 0 | 0 | |

Wahrheitstabelle für die Ansteuerlogik

Halbbrücke : 0 / 1 : nicht einschalten / einschalten

Vollbrücke : 0 / 1 : Brückenast 0/1 einschalten

Vorwärts / Rückwärts : $T_I$, $T_{II}$, $T_{III}$ invertieren

Blockieren : Festhalten des Schalt-musters $T_I$, $T_{II}$, $T_{III}$

# FIG. 16

$f_S$  (z.B. 10 Hz)

$f_N$ (z.B. 50 Hz )

————— : Halbbrücke          ——·····——·····—— : Vollbrücke

0 278 532

Vollbrückenansteuerung mit Optokopplern

# FIG. 17

Vollbrückenansteuerung mit Zusatzfunktion Bremsen

FIG. 18

# FIG. 19

Vollbrückenansteuerung mit 6 Impulstransformatoren

226

E 50

MF1  MF2  MA

$\overline{MA}$

+75 V  IT 1  PO

248'

E"20  U2  P1  Tr 4  Tr 1

N1  Q1

E"21  U3  P2  IT 2  Tr 2

N2  Q2  Spule II  Tr 3

Triacs für Spule I

E"22  U4  P3  Spule III

N3  Q3

222  E"23

Treiber

PU

0 278 532

+5V

S1

Digitaler
F max-Befehl
von der
Zentrale

S2

S3

AS 1

R1

R8

8-fach-
Analog-
Schalter

C1

MF3

222

Sp

Ụ NAP

226

Schubbegrenzung

FIG. 20

+5V

S4

Digitaler
V max-Befehl
von der
Zentrale

S5

S6

AS 2

R9

R16

8-fach-
Analog-
Schalter

C2

MF4

MFA

224

FF

OR 8

IF

XOR        I8

232

226

Geschwindigkeitsbegrenzung

FIG. 21